# EUROPEAN PATENT APPLICATION

(11) **EP 1 541 608 A1**
(43) Date of publication of application: **15.06.2005**
(21) Application number: 03797724.6
(22) Date of filing: 22.09.2003
(51) Int. Cl.: C08G 18/66, C08L 75/08, C08L 23/00

(54) **THERMOPLASTIC POLYMER, THERMOPLASTIC POLYMER COMPOSITION, ANTISTATIC AGENT, AND RESIN COMPOSITION**

(30) Priority: 20.09.2002 JP 2002275062
(71) Applicant: MITSUI TAKEDA CHEMICALS, INC., Tokyo 100-6009 (JP)
(72) Inventor: MATSUMOTO, Shinsuke, MITSUI TAKEDA CHEMICALS, INC., Sodegaura-shi, Chiba 299-0265 (JP); KUNIHIRO, Tamotsu, MITSUI TAKEDA CHEMICALS, INC., Sodegaura-shi, Chiba 299-0265 (JP); ITOU, Hisato, MITSUI TAKEDA CHEMICALS, INC., Sodegaura-shi, Chiba 299-0265 (JP); KUMAKI, Takashi, MITSUI TAKEDA CHEMICALS, INC., Sodegaura-shi, Chiba 299-0265 (JP)
(74) Representative: Wytenburg, Wilhelmus Johannes & Others
(86) International application number: PCT/JP2003/012069
(87) International publication number: WO 2004/026937

(57) **Abstract**

A thermoplastic polymer compound can be obtained by allowing a compound having a bivalent organic group to react with a polyoxyalkylene diol obtained by addition-polymerization of an urea compound having a partial structure refractivity of 14 to 35 and a dipole moment of 2.5D to 5.5D with an alkylene oxide. A thermoplastic polymer composition comprises the thermoplastic polymer compound and an inorganic salt of an alkali metal or the like. The polymer compound and the polymer composition are useful as an antistatic agent and have excellent antistatic properties and excellent transparency.

## Description

### TECHNICAL FIELD

The present invention relates to a thermoplastic polymer compound having a repeating unit which comprises a specific structural unit having an urea group, an oxyalkylene group and a bivalent organic group capable of binding to the oxyalkylene group. The present invention also relates to a thermoplastic polymer composition which comprises the thermoplastic polymer compound and an inorganic salt of an alkali metal or the like. Further, the present invention relates to an antistatic agent which comprises the thermoplastic polymer compound or the thermoplastic polymer composition, and to a resin composition which comprises the thermoplastic polymer compound and various resins.

### BACKGROUND OF THE INVENTION

As a method for providing antistatic properties to thermoplastic resins such as polyolefins, a method of incorporating an antistatic agent such as a polyether ester amide is known conventionally. In this method, however, it is necessary to add a large amount of polyether ester amide or to add a large amount of a compatibilizing agent in order to improve compatibility between polyether ester amide and polyolefins.

Under the circumstance, an antistatic agent capable of exhibiting the antistatic properties by adding a small amount of the antistatic agent has been studied. Japanese Laid-open Publication No. 2001-278985 discloses an antistatic agent which comprises a block polymer having an alternating structure between a polyolefin block and a hydrophilic polymer block. The addition of a small amount of the antistatic agent can provide permanent antistatic properties to polyolefin resins, but provides insufficient transparency.

Therefore, the development of an antistatic agent capable of providing the antistatic properties to thermoplastic resins such as polyolefins and having excellent transparency has been desired.

Incidentally, polyoxyalkylene polyols used in the field of polyurethanes are prepared by addition-polymerizing an alkylene oxide to a compound having at least one active hydrogen in the molecule in the presence of a catalyst of a basic compound such as potassium hydroxide, sodium hydroxide, cesium hydroxide, tertiary amine, phosphazenium compound. Examples of the raw material include aliphatic alcohols, aromatic alcohols, aliphatic amines, aromatic amines and carboxylic acids. For example, in the field of rigid polyurethanes, examples of the raw material selected include polyfunctional alcohols, aromatic alcohols and aromatic amines from the viewpoint of improving the resin strength and the reaction activity with isocyanates. In the field of surfactants, examples of the raw material selected include a compound having special functional groups with extremely different polarities, such as long-chain alkyl phenol and aliphatic carboxylic acids, from the viewpoint of controlling the hydrophilicity and lipophilicity of the molecule. To such raw materials, alkylene oxide is added by controlling the kind, amount and addition form thereof and thereby a polyoxyalkylene polyol having desired properties is prepared.

However, there are limitations on the combination of the kind, the amount and the addition form of the raw material or the alkylene oxide, which can be used industrially. Therefore, it was sometimes difficult to prepare a polyoxyalkylene polyol having desired properties.

A method for preparing a benzimidazolone by reacting an aromatic diamine with COCl₂ is known (Organic Chemistry, Vol.15, p.246, published by Asakura Shoten Co., Ltd. in February 5, 1964). However, it was difficult to prepare a benzimidazolone derivative having a polyoxyalkylene group by reacting an aromatic diamine having a polyoxy alkylene group with COCl₂ in the same manner as the above method.

### OBJECT OF THE INVENTION

The present invention is intended to solve the problems associated with the prior art as described above, and it is an object of the present invention to provide a thermoplastic polymer compound useful as an antistatic agent and a thermoplastic polymer composition containing the thermoplastic polymer compound.

### SUMMARY OF THE INVENTION

The present inventors have earnestly been studied to solve the above problems, and found that a thermoplastic polymer compound which contains a repeating unit containing a specific structural unit having an urea group stably shows excellent antistatic properties for a long period of time and also has excellent transparency. Thus, the present invention has been accomplished.

A thermoplastic polymer compound of the present invention has a molecular weight of not less than 3000 and a repeating unit represented by the following formula (1) 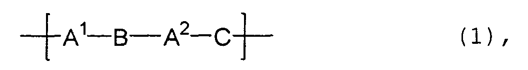 wherein
(i) structural units A¹ and A² are oxyalkylene groups and may be the same or different from each other,
(ii) structural unit B is represented by the following formula (2) 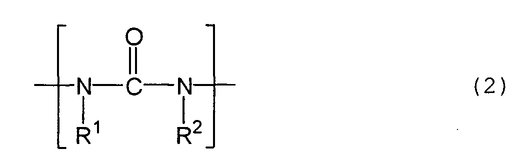 in which R¹ and R² are each independently a substituent containing a hydrocarbon group of 1 to 20 carbon atoms, and may contain an oxygen atom and a nitrogen atom, and R¹ and R² may form a ring structure by linking with each other, and
   the structural unit B has a partial structure refractivity, as determined as the sum of atomic refractions using atomic refractivities, of 14 to 35, and
   when the structural unit B forms a compound represented by the following formula (3)

   CH₃-B-CH₃ (3),

   the dipole moment of the compound is in the range of 2.5D to 5.5D, and
(iii) the structure unit C is a bivalent organic group capable of binding to the structural units A¹ and A².

The structural unit B preferably contains at least one structural unit selected from structural units represented by the following formulae (4) to (11): 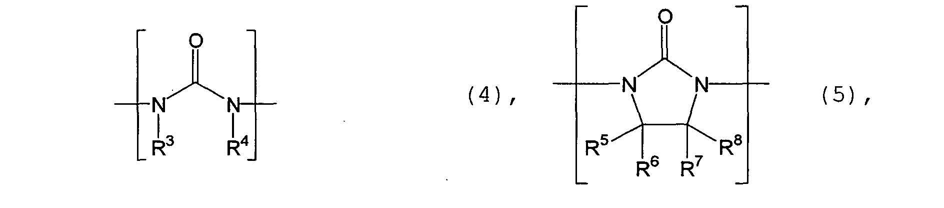 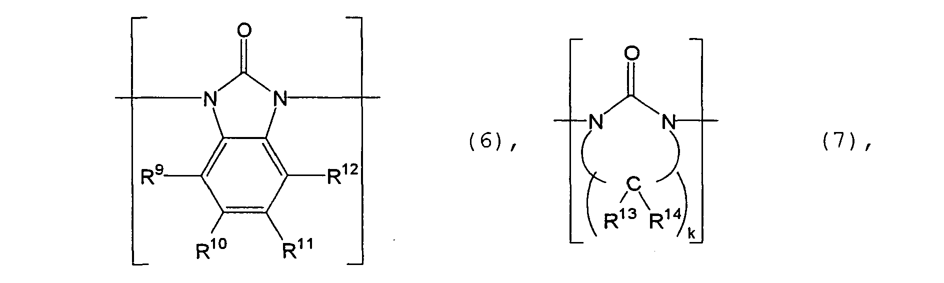 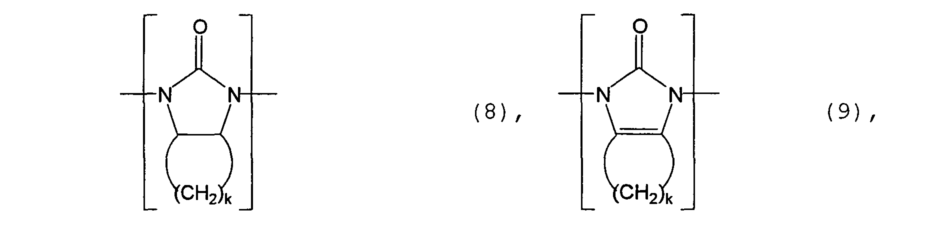 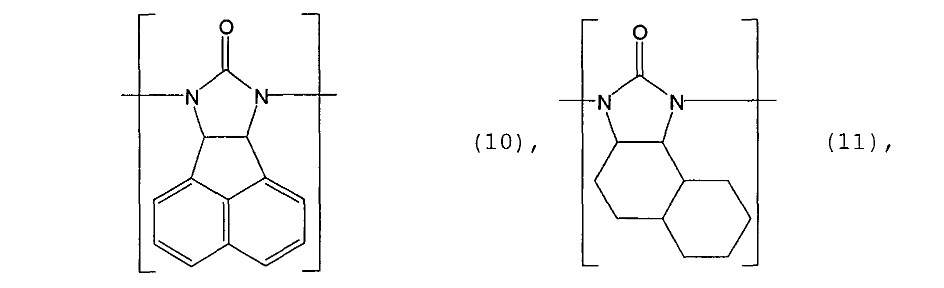 wherein, in the formula (4), R³ and R⁴ are each independently a substituent containing a hydrocarbon group of 1 to 20 carbon atoms, and may contain an oxygen atom and a nitrogen atom, in the formula (5), R⁵ to R⁸ are each independently a hydrogen atom or a substituent containing a hydrocarbon group of 1 to 19 carbon atoms, in the formula (6), R⁹ to R¹² are each independently a hydrogen atom or a substituent containing a hydrocarbon group of 1 to 17 carbon atoms, in the formula (7), R¹³ to R¹⁴ are each independently a hydrogen atom or a substituent containing a hydrocarbon group of 1 to 19 carbon atoms, and in the formulae (7) to (9), k is 3 or 4.

The thermoplastic polymer compound is preferably a copolymer having the repeating unit represented by the formula (1) and a repeating unit represented by the following formula (12) 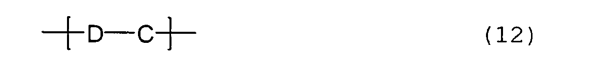 wherein the structural unit C is a bivalent organic group capable of binding to the structural unit D and the structural units A¹ and A² in the formula (1),
the structural unit D is a bivalent group containing at least one hydrocarbon group of 1 to 20 carbon atoms and obtained from a hydrocarbon-based diol HO-D-OH having a number-average molecular weight of 100 to 4800.

The hydrocarbon-based diol HO-D-OH is preferably a comb-shaped diol having at least two monovalent hydrocarbon groups of 3 to 20 carbon atoms.

The structural unit C is preferably a bivalent group derived from at least one compound selected from the group consisting of a diisocyanate compound, dicarboxylic acid, dicarboxylic anhydride, dicarboxylic acid ester, dicarboxylic acid dihalide, carbonate compound, diol and dihalide given by substituting a hydroxyl group in diol with halogen.

A thermoplastic polymer composition of the present invention comprises the thermoplastic polymer compound and an alkali metal inorganic salt or an alkali earth metal inorganic salt.

An antistatic agent of the present invention comprises the thermoplastic polymer compound or the thermoplastic polymer composition.

A resin composition of the present invention comprises the thermoplastic polymer compound or the thermoplastic polymer composition, and a polyolefin, an ethylene vinyl acetate copolymer, an ethylene ethyl(meth)acrylate copolymer or an ethylene (meth)acrylic acid copolymer.

The difference between the Haze of the resin composition and the Haze of resin components other than the thermoplastic polymer compound contained in the composition is not more than 5.

### DESCRIPTION OF THE PREFERRED EMBODIMENTS

### <Thermoplastic polymer compound>

The thermoplastic polymer compound of the present invention has a repeating unit represented by the formula (1) 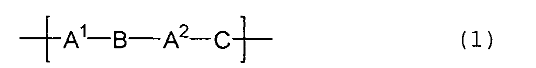 (hereinafter referred to "repeating unit (a)"), and a number average molecular weight, as measured by gel permeation chromatography (GPC), of not less than 3000 in terms of polystyrene.

### (i) Structural Unit A¹ and A²

The structural units A¹ and A² contained in the repeating unit (a) are oxyalkylene groups and may be the same or different from each other. The oxyalkylene group is group derived from alkylene oxide, and specifically is the groups A¹ and A² formed in polyoxyalkylene diol represented by H-A¹-B-A²-H obtained by addition-polymerizing an alkylene oxide to an urea compound having the structural unit B represented by H-B-H as described later.

Examples of the alkylene oxide used in the present invention include epoxy compounds such as ethylene oxide, propylene oxide, 1,2-butylene oxide, 2,3-butylene oxide, styrene oxide, glycidol, cyclohexene oxide, epichlorohydrin, epibromohydrin, methylglycidyl ether, allylglycidyl ether or phenylglycidyl ether. Of these alkylene oxides, it is preferred to use ethylene oxide, propylene oxide, 1,2-butylene oxide, 2,3-butylene oxide or styrene oxide, and it is further preferred to use ethylene oxide or propylene oxide. These alkylene oxides may be used singly or in combination with two or more.

### (ii) Structural Unit B

The structural unit B contained in the repeating unit (a) is a structural unit represented by the following formula (2). 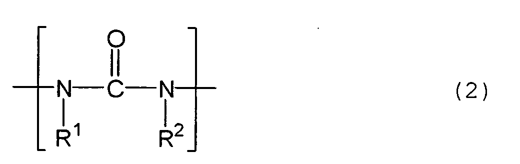 In the formula (2), R¹ and R² are each independently a substituent containing a hydrocarbon group of 1 to 20 carbon atoms. Examples of the hydrocarbon group of 1 to 20 carbon atoms are a linear or branched alkyl group having 1 to 20 carbon atoms, a linear or branched alkenyl group having 1 to 20 carbon atoms, a phenyl group and an aralkyl group having 7 to 20 carbon atoms. R¹ and R² may contain an oxygen atom and a nitrogen atom, and further may form a ring structure by linking with each other.

### (Partial Structure Refractivity)

The structural unit B contained in the thermoplastic polymer compound of the present invention has a partial structure refractivity of 14 to 35. The partial structure refractivity used herein is a refractivity of a partial structure, determined as the sum of atomic refractions using atomic refractivities as described in "Solvent Pocket Book" (edited by Organic Synthetic Chemistry Association, and published by Ohmsha Ltd., in 1971).

In the present invention, when the partial structure refractivity of the structural unit B is in the above range, the transparency is not impaired even when the thermoplastic polymer compound having the repeating unit (a) containing the structural unit B is added to thermoplastic resins, particularly to polyolefins.

### (Dipole Moment)

When the structural unit B contained in the thermoplastic polymer compound of the present invention forms a compound represented by the following formula (3)

CH₃-B-CH₃ (3)

(hereinafter referred to as "compound (b)"), the compound (b) has a dipole moment of 2.5D to 5.5D, preferably 3.5D to 4.5D. The dipole moment of the compound (b) is calculated using a commercially available semiempirical molecular orbital method program (MOPAC 2002 produced by Fujitsu). In this calculation, AM1 is selected as the calculation procedure, and GNORM = 0.3 is selected as a threshold permitting strain of molecules. In consideration of the stereoisomer dipole, the calculation is conducted with two significant digits.

In the present invention, when the dipole moment of the compound (b) is in the above range, the transparency is not impaired even when the thermoplastic polymer compound having the repeating unit (a) containing the structural unit B is added to thermoplastic resins, particularly to polyolefins. Further, the thermoplastic polymer compound can stably keep inorganic salts of an alkali metal or an alkali earth metal and has excellent transparency even when the composition containing the thermoplastic polymer compound contains these inorganic salts.

The structural unit B is preferably contained in an amount of 10 to 30 % by weight in the thermoplastic polymer compound. When the structural unit B is contained in the above amount in the thermoplastic polymer compound, the change of the Haze can be reduced and the transparency of the thermoplastic resin can be maintained even when the thermoplastic polymer compound is added to thermoplastic resins.

Examples of the structural unit B include structural units represented by the following formulae (4) to (11).

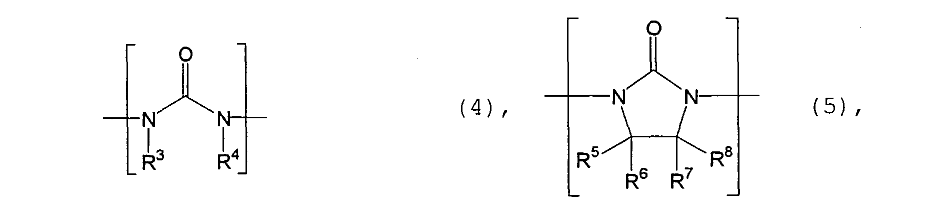

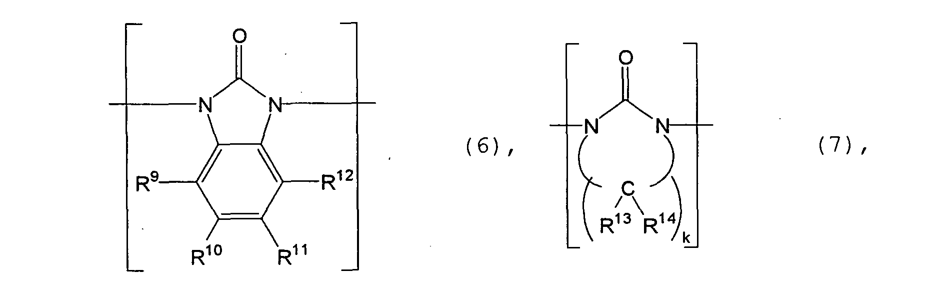

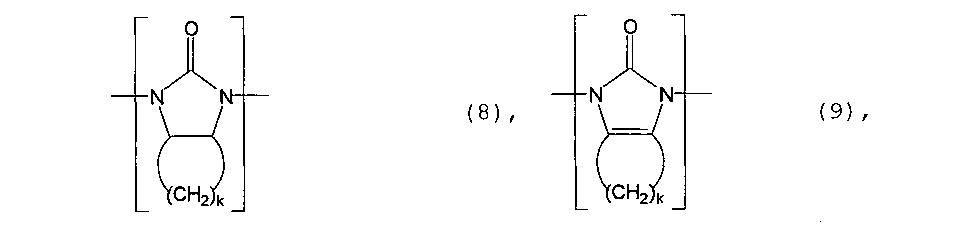

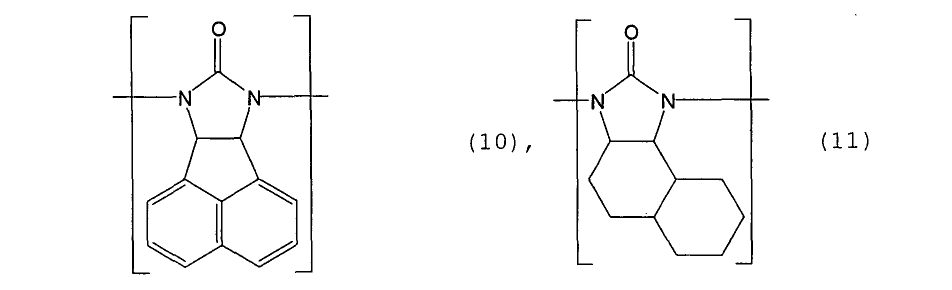

In the formula (4), R³ and R⁴ are each independently a substituent containing a hydrocarbon group of 1 to 20 carbon atoms. Examples of a hydrocarbon group of 1 to 20 carbon atoms include a linear or branched alkyl group having 1 to 20 carbon atoms, a linear or branched alkenyl group having 1 to 20 carbon atoms, a phenyl group and an aralkyl group having 7 to 20 carbon atoms. The groups R³ and R⁴ may contain an oxygen atom and a nitrogen atom.

In the formula (5), R⁵ to R⁸ are each independently a hydrogen atom or a substituent containing a hydrocarbon group of 1 to 19 carbon atoms. Examples of a hydrocarbon group of 1 to 19 carbon atoms include a linear or branched alkyl group having 1 to 19 carbon atoms, a linear or branched alkenyl group having 1 to 19 carbon atoms, a phenyl group and an aralkyl group having 7 to 19 carbon atoms.

In the formula (6), R⁹ to R¹² are each independently a hydrogen atom or a substituent containing a hydrocarbon group of 1 to 17 carbon atoms. Examples of a hydrocarbon group of 1 to 17 carbon atoms include a linear or branched alkyl group having 1 to 17 carbon atoms, a linear or branched alkenyl group having 1 to 17 carbon atoms, a phenyl group and an aralkyl group having 7 to 17 carbon atoms.

In the formula (7), R¹³ to R¹⁴ are each independently a hydrogen atom or a substituent containing a hydrocarbon group of 1 to 19 carbon atoms. Examples of a hydrocarbon group of 1 to 19 carbon atoms include a linear or branched alkyl group having 1 to 19 carbon atoms, a linear or branched alkenyl group having 1 to 19 carbon atoms, a phenyl group and an aralkyl group having 7 to 19 carbon atoms.

In the formulae (7) to (9), k is 3 or 4.

The structural unit B in the thermoplastic polymer compound of the present invention is derived from a urea compound H-B-H having two active hydrogen atoms. The urea compound can be obtained by reacting two primary amino groups with phosgene. The reaction of two primary amino groups with phosgene may be a reaction of two molecules of an amine compound having one primary amino group in one molecule with one molecule of phosgene, or a reaction of one molecule of an amine compound having two primary amino groups in one molecule with one molecule of phosgene. The former reaction provides a urea compound having the structural unit B represented by the formula (4), and the latter reaction provides urea compounds having the structural unit B represented by any one of the formulae (5) to (11).

Examples of the amine compound having one primary amino group in one molecule include methylamine, ethylamine, propylamine, butylamine, isobutylamine, sec-butylamine, 1,2-dimethylpropylamine, hexylamine, 2-ethylhexylamine, allylamine, 3-pentylamine, isoamylamine, 2-octylamine, 3-methoxypropylamine, 3-ethoxypropylamine, 3-propoxypropylamine, 3-isopropoxypropylamine, 3-butoxypropylamine, 3-isobutoxypropylamine, 2-ethylhexyloxypropylamine, 3-decyloxypropylamine, 3-lauryloxypropylamine, 3-myristyloxypropylamine, dimethylaminoethylamine, diethylaminoethylamine, N,N-diisopropylaminoethylamine, dimethylaminopropylamine, diethylaminopropylamine, dibutylaminopropylamine, dimethylaminoethoxypropylamine, N-aminoethylpiperidine, N-aminoethyl-4-pipecoline, N-aminopropylpiperidine, N-aminopropyl-2-pipecoline, N-aminopropyl-4-pipecoline, N-aminoethylmorpholine, 4-aminoethyl-1-butylpiperidine, N-aminopipecoline, N-amino-4-pipecoline, benzylamine, α-phenethylamine, phenethylamine, p-methoxyphenethylamine, 1-methyl-3-phenylpropylamine, N-benzyl-3-aminopyrrolidine, 1-amino-4-methylpiperazine, 1-amino-4-cyclopentylpiperazine, furfurylamine, 2-aminomethylpyrazine, 2-aminopyrazine, 3-aminopyridine, 4-aminopyridine, 3-aminomethylpyridine, 4-aminomethylpyridine, aniline, 2,4-xylidine, 3,4-xylidine, o-toluidine, m-toluidine and p-toluidine. These compounds may be used singly or in combination with two or more.

Examples of the amine compound having two primary amino groups in one molecule include ethylenediamine, 1,2-diaminopropane, 1,3-diaminopropane, 1,2-diamino-2-methylpropane, 1,2-diaminobutane, 1,3-diamino-2,2-dimethylpropane, 1,2-diaminohexane, 1,2-diaminocyclohexane, 1,2-diaminocyclohexa-1-ene, 1,4-diaminobutane, 2,3-diaminotoluene, 3,4-diaminotoluene, 1,8-diaminonaphthalene and 1,2-diaminodecalin. These compounds may be used singly or in combination with two or more.

Examples of an amine compound having two primary amino groups in one molecule, which can derive the structural unit B other than the structural units represented by the formulae (5) to (11), include 3-(dimethylamino)propyl amine, 1,2-bis(3-aminopropoxy)ethane, 1,3-bis-(3-aminopropoxy)-2,2-dimethylpropane, α,ω-bis-(3-aminopropyl)-polyethylene glycol ether, methylimino-bis-propylamine, 1,4-(bis-aminopropyl)piperazine, 2,3-diaminopyridine, 4,5-diaminopyrimidine, 1,2-diaminocyclohexane, 1,10-diaminodecane, 1,12-diaminododecane, 1,7-diaminoheptane, 1,8-diaminooctane, 1,5-diaminopentane and 9,10-diaminophenanthrene. These compounds may be used singly or in combination with two or more.

### (iii) Structural Unit C

The structural unit C contained in the repeating unit (a) is a bivalent organic group capable of binding to the structural units A¹ and A². Examples of the bivalent organic group include groups derived from a compound having a bivalent organic group, such as a diisocyanate compound, dicarboxylic acid, dicarboxylic anhydride, dicarboxylic acid ester, dicarboxylic dihalide, carbonate compound, diol or dihalide given by substituting a hydroxyl group in diol with halogen.

Examples of the diisocyante compound include aliphatic diisocyanate compounds such as 1,6-diisocyanatohexane (HDI); alicyclic diisocyanate compounds such as 2,5- or 2,6-bis-isocyanatomethyl-bicyclo[2,2,1]heptane (NBDI), 3,3,5-trimethyl-1-isocyanato-5-isocyanatomethylcyclohexane (IPDI), 1,6-bis-isocynatomethylcyclohexane (H₆-XDI) and bis(4,4'-isocyanatocyclohexyl)methane (H₁₂-MDI); and aromatic diisocyanate compounds such as 4,4'-diphenylmethane diisocynate (4,4'-MDI), 2,4'-diphenylmethane diisocyanate (2,4'-MDI), 2,4-toluene diisocyanate (2,4-TDI) and 2,6-toluene diisocyanate (2,6-TDI), and dimers, trimers or polymers of these compounds, and further, crude TDI or crude MDI which are mixtures of these compounds and their mixtures and furthermore 1,5-naphthalene diisocyanate (1,5-NDI) and 1,6-bis-isocyanatomethyl benzene (XDI).

Examples of dicarboxylic acid and dicarboxylic anhydride include aliphatic dicarboxylic acids such as brassylic acid, sebacic acid, adipic acid, glutaric acid, fumaric acid, maleic acid, succinic acid, itaconic acid, malonic acid, oxalic acid, citraconic acid, 3,3'-dithiopropionic acid, 3,3'-thiodipropionic acid, itaconic anhydride, maleic anhydride, succinic anhydride, citraconic anhydride, hexahydrophthalic anhydride, endomethylenetetrahydrophthalic anhydride, methylendomethylenetetrahydrophthalic anhydride and methyltetrahydrophthalic anhydride; aromatic dicarboxylic acids such as terephthalic acid, phthalic acid, phthalic anhydride, isophthalic acid, 1,4-naphthalenedicarboxylic acid and 2,6-naphthalenedicarboxylic acid; 2,3-pyrazinedicarboxylic acid; and 2,3-pyridinedicarboxylic acid.

Examples of dicarboxylic acid ester include aliphatic carboxylic acid esters such as dimethyl brassylate, dimethyl sebacate, diethyl sebacate, dimethyl adipate, diethyl adipate, diethyl succinate, dimethyl oxalate, diethyl oxalate, dimethyl maleate, diethyl maleate, dimethyl fumarate, diethyl fumarate, diethyl malonate and dimethyl malonate; and aromatic dicarboxylic acid esters such as diallyl o-phthalate, dimethyl isophthalate, diallyl isophthalate, dimethyl terephthalate, diallyl terephthalate and dimethyl 2,6-naphthalenedicarboxylate.

Examples of dicarboxylic acid dihalide include aliphathic dicarboxylic acid dihalides such as sebacyl chloride, adipyl chloride, succinyl chloride and fumaryl chloride; and aromatic dicarboxylic acid dihalides such as o-phthalyl chloride, isophthalyl chloride and terephthalyl chloride.

Examples of the carbonate compound include dimethyl carbonate and diethyl carbonate. An example of the compound capable of forming a carbonate group by reacting with alcohol includes phosgene.

Examples of the diol include ethylene glycol, propylene glycol, diethylene glycol, dipopylene glycol, 1,3-propanediol, 1,3-butanediol, 1,4-butanediol, 1,6-hexanediol and 1,4-cyclohexanediol, and further include polypropylene glycol, polyethylene glycol and polytetramethylene ether glycol which are obtained by using the above diol as an initiator and have a number-average molecular weight of not more than 2000. Examples of dihalide given by substituting a hydroxyl group in diol with halogen include those obtained by substituting a hydroxyl group in the above-mentioned diol with halogen such as chlorine and bromine, for example, 1,2-dichloroethane, 1,2-dichloropropane, bis(2-chloroethyl)ether, bis(3-chloropropyl)ether, 1,3-dichloropropane, 1,3-dichlorobutane, 1,4-dichlorobutane, 1,6-dichlorohexane, 1,4-dichlorocyclohexane, and halide obtained by substituting a hydroxyl group in the polypropylene glycol, polyethylene glycol, polytetramethylene ether glycol or the like with chlorine; 1,2-dibromoethane, 1,2-dibromopropane, bis(2-bromoethyl)ether, bis(3-bromopropyl)ether, 1,3-dibromopropane, 1,3-dibromobutane, 1,4-dibromobutane, 1,6-dibromohexane, 1,4-dibromocyclohexane, and and halide obtained by substituting a hydroxyl group in the polypropylene glycol, polyethylene glycol, polytetramethylene ether glycol or the like with bromine.

### <Process for Preparing Thermoplastic Polymer Compound>

The thermoplastic polymer compound of the present invention can be prepared by addition-polymerizing the above alkylene oxide to the above urea compound H-B-H to form polyoxyalkylene diol H-A¹-B-A²-H, and then by reacting the polyoxyalkylene diol with the above compound having a bivalent organic group. The above polyoxy alkylene diol (polyoxyalkylene polyol) can be prepared by the following method.

### (Polyoxyalkylene Polyol and Preparation Process Thereof)

The above polyoxyalkylene polyol (polyoxyalkylene diol) used in the present invention and the preparation process thereof will be described in the case of using an active hydrogen compound (urea compound) with a specific structure having an aromatic ring and a urea group in the molecule as a starting material, but the starting material does not limit to this active hydrogen compound.

Firstly, the summaries of polyoxyalkylene polyol and the preparation process thereof are described.

The preparation process of polyoxyalkylene polyol used in the present invention preferably comprises reacting a starting material with an alkylene oxide, wherein the starting material comprises a mixture of:
(A) a compound represented by the following formulae (13) and/or (14) 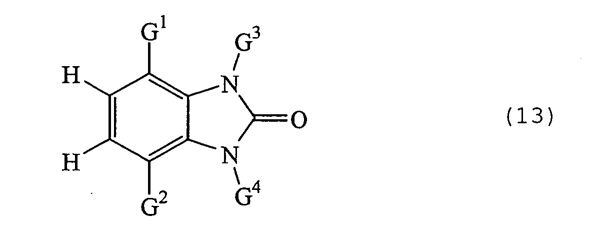 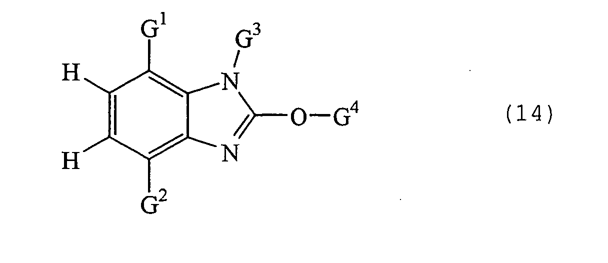 in which G¹ and G² are each independently H or a linear or cyclic hydrocarbon group of 1 to 20 carbon atoms, provided that G¹ and G² are not H simultaneously; G³ is H or -(R²¹O)ᵢ-H, and G⁴ is H or -(R²²O)ⱼ-H, provided that G³ and G⁴ may be the same or different from each other; R²¹ and R²² are each independently at least one linear or branched organic group selected from the group consisting of -C₂H₄-, -C₃H₆-, -C₄H₈-and -CH₂-CHPh-; and i and j are each independently a natural number, and
(B) a compound represented by the following formulae (15) and/or (16) 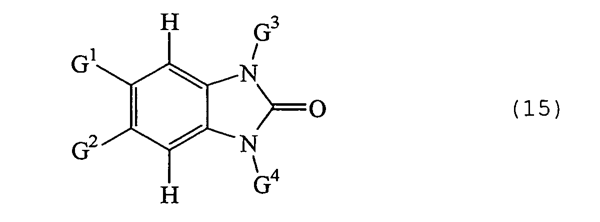 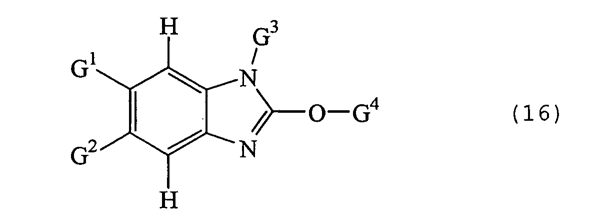 in which G¹ and G² are each independently H or a linear or cyclic hydrocarbon group of 1 to 20 carbon atoms, provided that G¹ and G² are not H simultaneously; G³ is H or -(R²¹O)ᵢ-H, and G⁴ is H or -(R²²O)ⱼ-H, provided that G³ and G⁴ may be the same or different from each other; R²¹ and R²² are each independently at least one linear or branched organic group selected from the group consisting of -C₂H₄-, -C₃H₆-, -C₄H₈-and -CH₂-CHPh-; and i and j are each independently a natural number.

The above starting material preferably contains the compound represented by the formula (13) and/or the compound represented by the formula (15) in amounts of not less than 10 % by weight based on the total amount of the starting materials. The weight ratio (A/B) of the compound(s) (A) to the compound(s) (B) in the above mixture is preferably from 1/99 to 99/1.

The polyoxyalkylene polyol used in the present invention is a polyoxyalkylene polyol prepared by the above preparation process and has a hydroxyl number of 10 to 50 mgKOH/g.

The polyoxyalkylene polyol used in the present invention preferably comprises a mixture of a compound (C) and a compound (D), and preferably has a hydroxyl number of 10 to 500 mgKOH/g,
wherein the compound(s) (C) are represented by the following formulae (17) and/or (18) 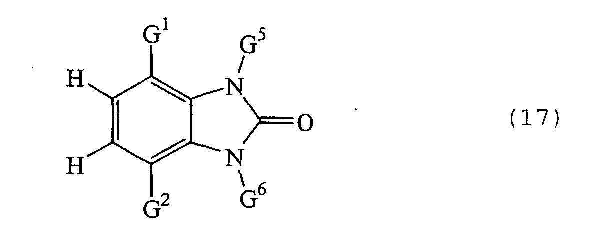 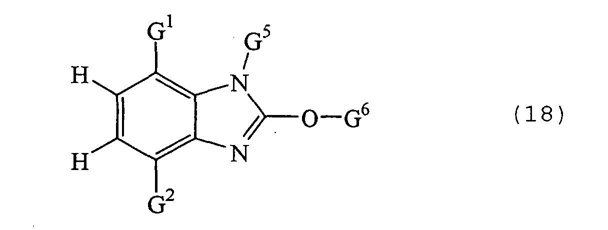 in which G¹ and G² are each independently H or a linear or cyclic hydrocarbon group of 1 to 20 carbon atoms, provided that G¹ and G² are not H simultaneously; G⁵ is an atom or substituent selected from the group consisting of H, -(R²³O)ₘ-H and -(R²¹O)ᵢ-(R²³O)ₘ-H, G⁶ is an atom or substituent selected from the group consisting of H, -(R²⁴O)ₙ-H and -(R²²O)ⱼ-(R²⁴O)ₙ-H, and -(R²¹O)ᵢ- and -(R²²O)ⱼ- are each a substituent derived from the starting materials, provided that G⁵ and G⁶ may be the same or different from each other, but are not H simultaneously; R²¹ , R²², R²³ and R²⁴ are each independently at least one linear or branched organic group selected from the group consisting of -C₂H₄-, -C₃H₆-, -C₄H₈- and -CH₂-CHPh-; and i, j, m and n are each independently a natural number, and
the compound(s) (D) are represented by the following formulae (19) and/or (20) 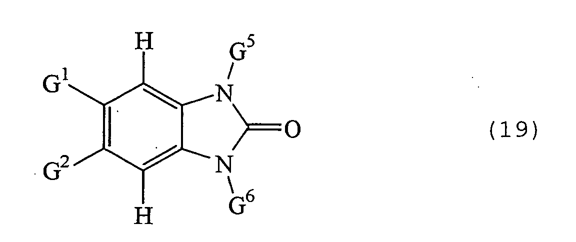 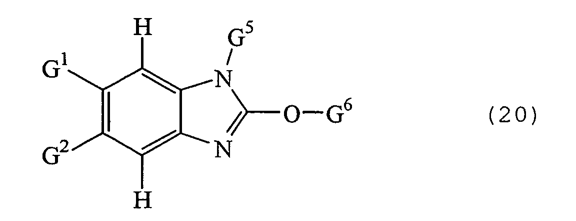 in which G¹ and G² are each independently H or a linear or cyclic hydrocarbon group of 1 to 20 carbon atoms provided that G¹ and G² are not H simultaneously; G⁵ is an atom or substituent selected from the group consisting of H, - (R²³O)ₘ-H and -(R²¹O)ᵢ-(R²³O)ₘ-H, G⁶ is an atom or substituent selected from the group consisting of H, -(R²⁴O)ₙ-H and - (R²²O)ⱼ-(R²⁴O)ₙ-H, and -(R²¹O)ᵢ- and -(R²²O)ⱼ- are each a substituent derived from the starting materials, provided that G⁵ and G⁶ may be the same or different from each other, but are not H simultaneously; R²¹, R²², R²³ and R²⁴ are each independently at least one linear or branched organic group selected from the group consisting of -C₂H₄-, -C₃H₆-, -C₄H₈-and -CH₂-CHPh-; and i, j, m and n are each independently a natural number.

The weight ratio (C/D) of the compound(s) (C) to the compound(s) (D) in the above mixture is preferably from 1/99 to 99/1.

Next, polyoxyalkylene polyol and the preparation process thereof are described in more detail.

### (Starting Material)

The starting material used in the present invention is an active hydrogen compound with a specific structure having an aromatic ring and a urea group in the molecule, and comprises a mixture of:
(A) a compound represented by the following formulae (13) and/or (14) 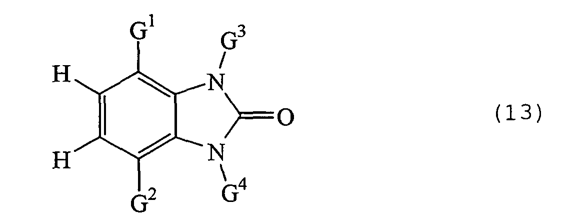 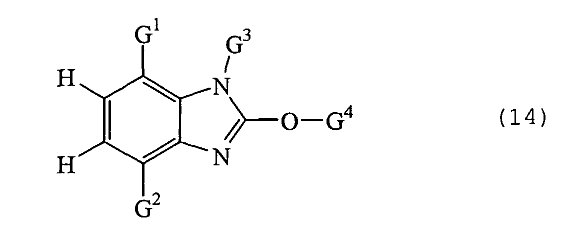 in which G¹ and G² are each independently H or a linear or cyclic hydrocarbon group of 1 to 20 carbon atoms, provided that G¹ and G² are not H simultaneously; G³ is H or -(R²¹O)ᵢ-H, and G⁴ is H or -(R²²O)ⱼ-H, provided that G³ and G⁴ may be the same or different from each other; R²¹ and R²² are each independently at least one linear or branched organic group selected from the group consisting of -C₂H₄-, -C₃H₆-, -C₄H₈- and -CH₂-CHPh- (in the present specification, Ph is a phenyl group); and i and j are each independently a natural number, and
(B) a compound represented by the following formulae (15) and/or (16) 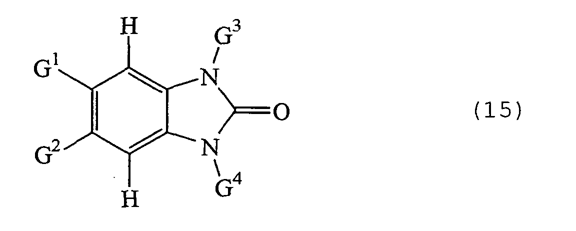 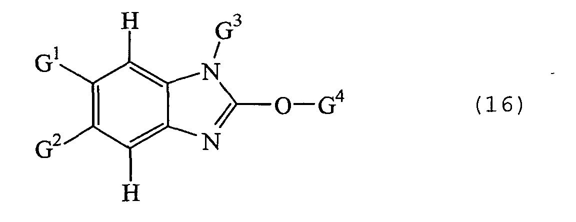 in which G¹ and G² are each independently H or a linear or cyclic hydrocarbon group of 1 to 20 carbon atoms, provided that G¹ and G² are not H simultaneously; G³ is H or -(R²¹O)ᵢ-H, and G⁴ is H or -(R²²O)ⱼ-H, provided that G³ and G⁴ may be the same or different from each other; R²¹ and R²² are each independently at least one linear or branched organic group selected from the group consisting of -C₂H₄-, -C₃H₆-, -C₄H₈- and -CH₂-CHPh-; and i and j are each independently a natural number.

The starting material has a molecular weight of preferably 148 to 450, more preferably 148 to 280, furthermore preferably 148 to 220.

The above starting material preferably contains the compound represented by the formula (13) and/or the compound represented by the formula (15) in amounts of usually not less than 10 % by weight, preferably 20 to 100 %, more preferably 50 to 100 % based on the total amount of the starting materials.

The weight ratio (A/B) of the compound(s) (A) to the compound(s) (B) in the above mixture is preferably from 1/99 to 99/1, more preferably 25/75 to 75/25, furthermore preferably 35/65 to 65/35.

The preparation process of the compounds represented by the above formulae (13) to (16) is not particularly limited. For example, the compounds can be prepared by the following processes.
(1) The compounds represented by the formulae (13) to (16) wherein G³ and G⁴ are H's together:
   Of the compounds represented by the formulae (13) to (16) wherein G³ and G⁴ are H's together, benzimidazolone derivatives represented by the following formulae (21) and (22) 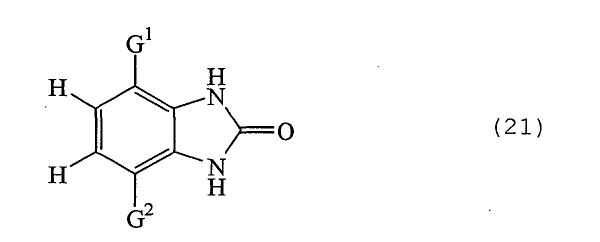 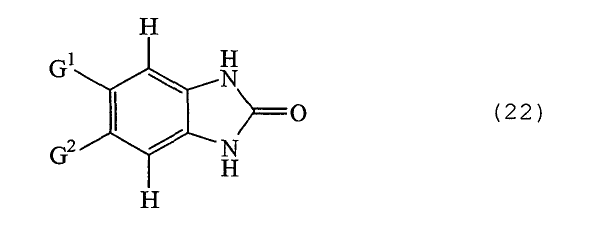
   in which G¹ and G² are each independently H or a linear or cyclic hydrocarbon group of 1 to 20 carbon atoms, provided that G¹ and G² are not H simultaneously, can be prepared by a process such that aromatic diamine represented by the following formulae (23) and (24) 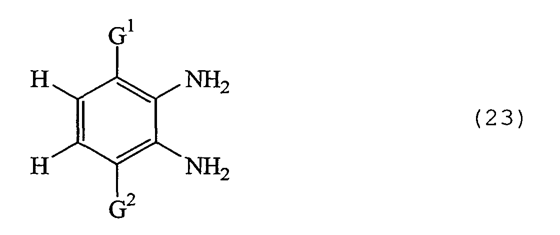 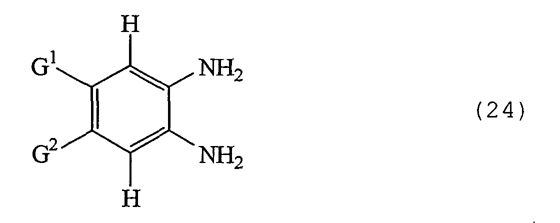 in which G¹ and G² are each independently H or a linear or cyclic hydrocarbon group of 1 to 20 carbon atoms, provided that G¹ and G² are not H simultaneously, is allowed to react with COCl₂ or urea (disclosed in Organic chemistry, Vol.15, p.246, published by Asakura Shoten Co., Ltd. in February 5, 1964), or a process such that a hydrochloride of the above aromatic diamine is allowed to react with COCl₂, urethane or urea (disclosed in Organic Chemistry, Vol.15, p.246, published by Asakura Shoten Co., Ltd. in February 5, 1964) .

A preferable example of the aromatic diamine represented by the formula (23) includes 2,3-diaminotoluene, and a preferable example of the aromatic diamine represented by the formula (24) includes 3,4-diaminotoluene. The aromatic diamines represented by the formulas (23) and (24) may be each used singly or in a mixed state.

A preferable example of the preparation process includes a process of dissolving hydrochlorides of the compound represented by the formula (23) or (24) in water and then reacting them with COCl₂. In this process, the reaction temperature is preferably near room temperature in order to efficiently react the above compound with COCl₂. Further, in order to remove hydrochloric acid generated and unreacted COCl₂, it is preferred to add a NaOH aqueous solution together with COCl₂ at the same time and thereby to adjust the pH to about 3 to 4. Adjustment of the pH to about 3 to 4 permits to perform the reaction progress and the removal of byproducts and the unreacted COCl₂ at the same time. The benzimidazolone derivatives generally prepared are insoluble in water, and can be readily separated by filtration or the like.

Of the compounds represented by the formulae (13) to (16) wherein G³ and G⁴ are H's together, 2-oxybenzimidazole derivatives represented by the following formulae (25) and (26) 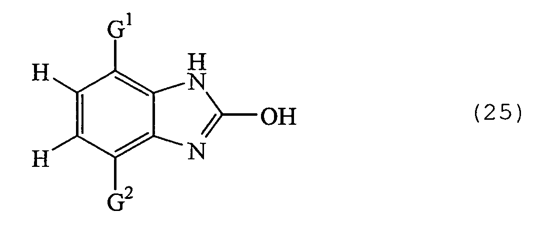 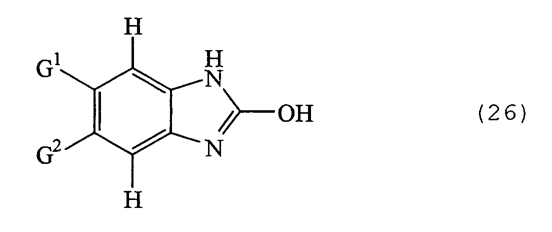 in which G¹ and G² are each independently H or a linear or cyclic hydrocarbon group of 1 to 20 carbon atoms, provided that G¹ and G² are not H simultaneously, can be obtained as tautomers of the compound represented by the formulae (21) and (22).

Usually, the benzimidazolone derivative and 2-oxybenzimidazole derivative, which is the tautomer, are prepared as a mixture. The benzimidazolone derivative and 2-oxybenzimidazole derivative, which is the tautomer, may be used in a mixed state or individually with separation, as the starting material used in the present invention. (2) The compounds represented by the formulae (13) to (16) wherein G³ and G⁴ are not H's simultaneously:
The compounds represented by the formulae (13) and (15) can be obtained by adding alkylene oxide to aromatic diamines represented by the formulae (23) and (24) to prepare an aromatic diamine derivative having an oxyalkylene group represented by the following formulae (27) and (28) 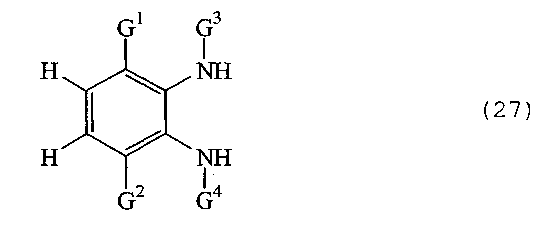 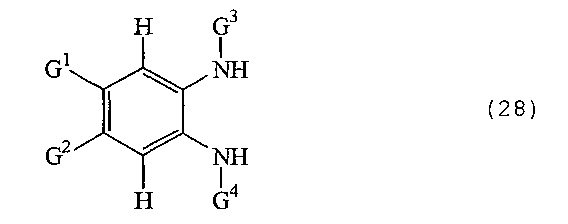 in which G¹ and G² are each independently H or a linear or cyclic hydrocarbon group of 1 to 20 carbon atoms provided that G¹ and G² are not H simultaneously; G³ is H or -(R²¹O)ᵢ-H, and G⁴ is H or -(R²²O)ⱼ-H, provided that G³ and G⁴ may be the same or different from each other, provided that G³ and G⁴ are not H simultaneously; R²¹ and R²² are each independently at least one linear or branched organic group selected from the group consisting of -C₂H₄-, -C₃H₆-, -C₄H₈- and -CH₂-CHPh-; and i and j are each independently a natural number;
   and then by reacting the aromatic diamine derivative with COCl₂ or the like.

However, when the aromatic diamine derivatives represented by the formulae (27) and (28) wherein i or j is 2 or more is prepared, at least one of amino groups in the aromatic diamine derivative is generally a tertiary amine. It is difficult for this diamine having tertiary amine to induce ring closure by reacting with COCl₂. Therefore, in the above process, it is preferred to prepare benzimidazolone derivatives represented by the formulae (27) and (28) wherein i and j are each 1.

The compounds represented by the formulas (13) to (16) wherein G³ and G⁴ are not H simultaneously can be also prepared by the process for preparing polyoxyalkylene polyols used in the present. Namely, it is also possible to use, as a starting material, polyoxyalkylene polyols obtained by adding alkyleneoxide to the starting material usable in the present invention and further the hydroxyl number of the polyoxyalkylene polyol is not limited particularly.

Examples of the compounds represented by the formula (13) include 4-methyl-2(3H)-benzimidazolone, 4-methyl-1,3-dihydro-1-(2-hydroxyethyl)-2H-benzimidazol-2-one, 4-methyl-1,3-dihydro-1,3-bis(2-hydroxyethyl)-2H-benzimidazol-2-one, 4-methyl-1,3-dihydro-1-(2-hydroxypropyl)-2H-benzimidazol-2-one, 4-methyl-1,3-dihydro-1,3-bis(2-hydroxypropyl)-2H-benzimidazol-2-one, 4-methyl-1,3-dihydro-1-(2-hydroxy-2-phenylethyl)-2H-benzimidazol-2-one, 4-methyl-1,3-dihydro-1,3-bis(2-hydroxy-2-phenylethyl)-2H-benzimidazol-2-one, 4-methyl-1,3-dihydro-1-(2-hydroxybutyl)-2H-benzimidazol-2-one, 4-methyl-1,3-dihydro-1,3-bis(2-hydroxybutyl)-2H-benzimidazol-2-one, 4-methyl-1,3-dihydro-1-(2,3-dihydroxypropyl)-2H- benzimidazol-2-one and 4-methyl-1,3-dihydro-1,3-bis(2,3-dihydroxy propyl)-2H-benzimidazol-2-one, and further include polyols such as diols given by adding an oxyalkylene group to hydroxyl groups of these compounds.

Examples of the compounds represented by the formula (14) include 4-methyl-2,3-dihydro-1H-benzimidazol-2-ol, 4-methyl-2,3-dihydro-1-(2-hydroxyethyl)-1H-benzimidazol-2-ol, 4-methyl-2,3-dihydro-1,3-bis(2-hydroxyethyl)-1H-benzimidazol-2-ol, 4-methyl-2,3-dihydro-1-(2-hydroxypropyl)-1H-benzimidazol-2-ol, 4-methyl-2,3-dihydro-1,3-bis(2-hydroxypropyl)-1H-benzimidazol-2-ol, 4-methyl-2,3-dihydro-1-(2-hydroxy-2-phenylethyl)-1H- benzimidazol-2-ol, 4-methyl-2,3-dihydro-1,3-bis(2-hydroxy-2-phenylethyl)-1H-benzimidazol-2-ol, 4-methyl-2,3-dihydro-1-(2-hydroxybutyl)-1H-benzimidazol-2-ol, 4-methyl-2,3-dihydro-1,3-bis(2-hydroxybutyl)-1H- benzimidazol-2-ol, 4-methyl-2,3-dihydro-1-(2,3-dihydroxypropyl)-1H-benzimidazol-2-ol and 4-methyl-2,3-dihydro-1,3-bis(2,3-dihydroxypropyl)-1H-benzimidazol-2-ol, and further include polyols such as diols given by adding an oxyalkylene group to hydroxyl groups of these compounds.

Examples of the compounds represented by the formula (15) include 5-methyl-2(3H)-benzimidazolone , 5-methyl-1,3-dihydro-1-(2-hydroxyethyl)-2H-benzimidazol-2-one, 5-methyl-1,3-dihydro-1,3-bis(2-hydroxyethyl)-2H- benzimidazol-2-one, 5-methyl-1,3-dihydro-1-(2-hydroxypropyl)-2H-benzimidazol-2-one, 5-methyl-1,3-dihydro-1,3-bis(2-hydroxypropyl)-2H-benzimidazol-2-one, 5-methyl-1,3-dihydro-1-(2-hydroxy-2-phenylethyl)-2H- benzimidazol-2-one, 5-methyl-1,3-dihydro-1,3-bis(2-hydroxy-2-phenylethyl)-2H-benzimidazol-2-one, 5-methyl-1,3-dihydro-1-(2-hydroxybutyl)-2H-benzimidazol-2-one, 5-methyl-1,3-dihydro-1,3-bis(2-hydroxybutyl)-2H-benzimidazol-2-one, 5-methyl-1,3-dihydro-1-(2,3-dihydroxypropyl)-2H-benzimidazol-2-one and 5-methyl-1,3-dihydro-1,3-bis(2,3-hydroxypropyl)-2H- benzimidazol-2-one, and further include polyols such as diols given by adding an oxyalkylene group to hydroxyl groups of these compounds.

Examples of the compounds represented by the formula (16) include 5-methyl-2,3-dihydro-1H-benzimidazol-2-ol, 5-methyl-2,3-dihydro-1-(2-hydroxyethyl)-1H-benzimidazol-2-ol, 5-methyl-2,3-dihydro-1,3-bis(2-hydroxyethyl)-1H-benzimidazol-2-ol, 5-methyl-2,3-dihydro-1-(2-hydroxypropyl)-1H-benzimidazol-2-ol, 5-methyl-2,3-dihydro-1,3-bis(2-hydroxypropyl)-1H-benzimidazol-2-ol, 5-methyl-2,3-dihydro-1-(2-hydroxy-2-phenylethyl)-1H-benzimidazol-2-ol, 5-methyl-2,3-dihydro-1,3-bis(2-hydroxy-2-phenylethyl)-1H-benzimidazol-2-ol, 5-methyl-2,3-dihydro-1-(2-hydroxybuthyl)-1H-benzimidazol-2-ol, 5-methyl-2,3-dihydro-1,3-bis(2-hydroxybuthyl)-1H-benzimidazol-2-ol, 5-methyl-2,3-dihydro-1-(2,3-dihydroxypropyl)-1H-benzimidazol-2-ol and 5-methyl-2,3-dihydro-1,3-bis(2,3-dihydroxypropyl)-1H-benzimidazol-2-ol, and further include polyols such as diols given by adding an oxyalkylene group to hydroxyl groups of these compounds.

The combination of the compound(s) (A) and the compound(s) (B) used as starting materials in the present invention is not particularly limited as long as the combination thereof is a combination of the compound(s) (A) represented by the formulae (13) and/or (14) with the compound(s) (B) represented by the formulae (15) and/or (16). It is preferred to use the combination of 4-methyl-2(3H)-benzimidazolone and/or 4-methyl-2,3-dihydro-1H-benzimidazol-2-ol as the compound(s) (A) and 5-methyl-2(3H)-benzimidazolone and/or 5-methyl-2,3-dihydro-1H-benzimidazol-2-ol as the compound(s) (B).

Further, it is also possible to arbitrarily use at least two compounds selected from the group consisting of the compounds represented by the formulae (13) and (14) as the compounds (A) and at least two compounds selected from the group consisting of the compounds represented by the formulae (15) and (16) as the compounds (B).

### (Alkylene Oxide)

The alkylene oxides used in the present invention include, for example, epoxy compounds such as ethylene oxide, propylene oxide, 1,2-butylene oxide, 2,3-butylene oxide, styrene oxide, glycidol, cyclohexene oxide, epichlorohydrin, epibromohydrin, methylglycidyl ether, allylglycidyl ether and phenylglycidyl ether. Of these alkylene oxides, ethylene oxide, propylene oxide, 1,2-butylene oxide, 2,3-butylene oxide or styrene oxide are preferably used, and further ethylene oxide or propylene oxide is more preferably used.

The alkylene oxides may be used singly or in combination with two or more.

### (Catalyst for Addition-Polymerizing Alkylene Oxide)

Examples of the catalyst for addition-polymerizing alkylene oxide include hydroxides of alkali metal such as sodium, potassium and cesium, and alkoxide compound thereof; tertiary amines such as dimethyloctyl amine, trioctyl amine, dimethyldecyl amine, dimethyllauryl amine, dimethylmyristyl amine, dimethylpalmityl amine, dimethyloleyl amine, dimethylstearyl amine, dimethyllinoleic amine and dimethyllinolenic amine; basic catalysts such as phosphazenium compounds as described in Japanese Laid-open Publication No. 2001-106780; Lewis acidic catalysts such as boron trifluoride etherate and the like; and composite metal cyanide catalysts such as zinc hexacyanocobaltate. Of these, the basic catalysts are preferably used. Further, the above catalysts may be used singly or in combination with two or more.

### (Solvent)

In addition-polymerization of alkylene oxides, a solvent can be optionally used. Examples of the solvent used in the present invention include aliphatic hydrocarbons such as pentane, hexane and heptane; ethers such as diethyl ether, tetrahydrofurane and dioxane; and aprotic polar solvents such as dimethyl sulfoxide, 1,3-dimethyl imidazolidine and N,N-dimethyl formamide. Of these, it is preferred to use the aprotic polar solvents capable of dissolving the starting material sufficiently. The above solvents may be used singly or in combination with two or more.

### (Process for Preparing PolyoxyAlkylene Polyol)

Next, the process for preparing polyoxyalkylene polyol used in the present invention will be described in detail.

The process for preparing polyoxyalkylene polyol used in the present invention comprises a step of addition-polymerizing alkylene oxide to the starting material in the presence of a catalyst for addition-polymerizing alkylene oxide, optionally in a solvent, and a step of purifying the resulting crude polyoxyalkylene polyol.

### (1) Polymerization step:

The addition-polymerization of the alkylene oxide to the starting material is generally carried out using a pressure-resistant reactor such as autoclave. First, the starting material and the catalyst for addition-polymerizing alkylene oxide are placed into a pressure-resistant reactor. The solvent may be used when necessary. The use of the solvent enables to dissolve the starting material and the catalyst sufficiently.

Alkylene oxide is fed to the starting material and the catalyst to start the reaction. Examples of a method for feeding alkylene oxide include a method of inclusively feeding a part of the necessary amount of alkylene oxide and repeating this procedure, and a method of continuously or intermittently feeding alkylene oxide.

The addition-polymerization is desirably started under reduced pressure or atmospheric pressure and carried out under a maximum pressure of usually 1960 kPa (20 kgf/cm², absolute pressure, refers to hereinafter), preferably 1470 kPa (15 kgf/cm²), more preferably 882 kPa (9 kgf/cm²). In starting the above addition-polymerization, it is preferred to carry out replacement operation in a gas phase in the reactor using an inert gas such as nitrogen or helium. The reaction temperature in the addition-polymerization is usually from 15 to 140°C, preferably 40 to 130°C, more preferably 50 to 120°C.

After completion of the reaction, unreacted monomers and the solvent are removed and then crude polyoxyalkylene polyol is collected.

### (2) Purification step:

In the polymerization steps, when the basic catalyst is used as the catalyst for addition-polymerizing alkylene oxide, it is generally necessary to neutralize or remove the basic catalyst.

Based on 100 parts by weight of the crude polyoxyalkylene polyol, water is added in an amount of 1 to 40 parts by weight and thereafter an acid is added in an amount such that the basic catalyst present in the crude polyoxy alkylene polyol is sufficiently neutralized, to precipitate a neutralized salt, and purification is performed by separation with filtration. Examples of the acid used for the neutralization may include inorganic acids such as phosphoric acid, phosphorous acid, hydrochloric acid, sulfuric acid and sulfurous acid; and organic acids such as formic acid, oxalic acid, succinic acid, acetic acid and maleic acid.

Excess acidic and basic components may be removed using adsorption by a synthetic inorganic adsorbent such as magnesium silicate and aluminum silicate. Specific examples of the adsorbent include various adsorbents such as TOMIX series, e.g. TOMIX AD-600 and TOMIX AD-700 (Trade Name, available from Tomita Pharmaceutical Co., Ltd.), KYOWARD series, e.g. KYOWARD 400, KYOWARD 500, KYOWARD 600 and KYOWARD 700 (Trade Name, available from Kyowa Chemical Industry Co., Ltd.), and MAGNESOL (available from Dallas Group, Inc.).

Further, the neutralization with acids and the removal with the synthetic inorganic adsorbent may be carried out in combination when necessary.

The catalyst can be also removed by a method such that water or a mixed solution of water and a solvent inert to polyoxyalkylene polyol, for example, a solvent selected from hydrocarbon solvents such as toluene, hexanes, pentanes, heptanes, butanes, lower alcohols, cyclohexanes, cyclopentanes and xylenes, is added in an amount of 1 to 200 parts by weight to 100 parts by weight of the crude polyoxyalkylene polyol, followed by separating the polyol, and then the resulting polyol is washed with water and thereafter water and organic solvent are distilled off from the resulting polyol.

Alternatively, the catalyst can be removed by a method such that 20 to 200 parts by weight of water is added to 100 parts by weight of the crude polyoxyalkylene polyol, the resulting mixture is allowed to contact with an ion-exchange resin at a temperature of 15 to 100°C, and thereafter the ion-exchange resin is removed by filtration, followed by dehydration treatment under reduced pressure. Preferable examples of the ion-exchange resin are cationic ion-exchange resins. Sulfonated styrene-divinylbenzene copolymers are preferably used. In the present invention, it is possible to use any of gel type and macro-porous ion-exchange resins. Furthermore, any of strongly acidic ion-exchange resins and slightly acidic ion-exchange resins may be used, and especially the strongly acidic ion-exchange resins are preferably used. Examples of the ion-exchange resins include various kinds of ion-exchange resins such as LEWATIT S100, LEWATIT S109, LEWATIT SP112, LEWATIT SP120 AND LEWATIT S100LF (Trade Name, available from Bayer AG.), DIAION SK1B, DIAION PK208 and DIAION PK202 (Trade Name, available from Mitsubishi Chemical Corp.), DOWEX HCR-S, 50WX1 and 50WX2 (Trade Name, available from Dow Chemical Co.), and AMBERLITE IR120, AMBERLITE IR122 and AMBERLITE 200C (Trade Name, available from Rohm & Haas Co.).

In the purification, it is preferred to add an antioxidant in order to prevent quality of polyoxy alkylene polyol from deteriotating. Examples of the antioxidant may include 2,6-di-tert-butyl-p-cresol (BHT), 4,4'-tetramethyldiaminodiphenylmethane, phenothiazine, lecithin, zinc dialkyldithiophosphate, dilaurylthiopropionate and distrearylthiodipropionate. The antioxidant is desirably used in an amount of usually 50 to 5000 ppm, preferably 100 to 4000 ppm, more preferably 300 to 2000 ppm based on the amount of the crude polyoxyalkylene polyol.

### (PolyoxyAlkylene Polyol)

The polyoxyalkylene polyol used in the present invention is a polyoxyalkylene polyol which can be obtained by the above preparation process.

The polyoxyalkylene polyol of the present invention comprises a mixture of:
(C) a compound represented by the following formulae (17) and/or (18) 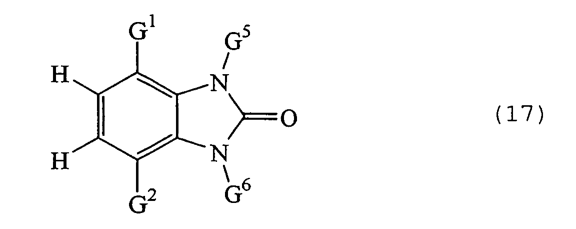 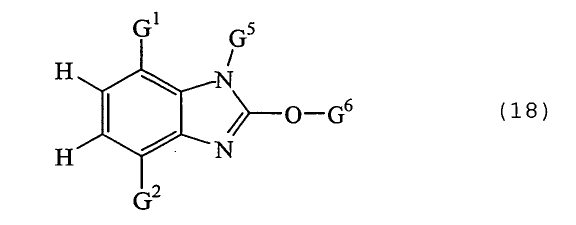 in which G¹ and G² are each independently H or a linear or cyclic hydrocarbon group of 1 to 20 carbon atoms, provided that G¹ and G² are not H simultaneously; G⁵ is an atom or substituent selected from the group consisting of H, -(R²³O)ₘ-H and -(R²¹O)ᵢ-(R²³O)ₘ-H, G⁶ is an atom or substituent selected from the group consisting of H, -(R²⁴O)ₙ-H and -(R²²O)ⱼ-(R²⁴O)ₙ-H, and -(R²¹O)ᵢ- and -(R²²O)ⱼ- are each a substituent derived from the starting materials, provided that G⁵ and G⁶ may be the same or different from each other, but are not H simultaneously; R²¹, R²², R²³ and R²⁴ are each independently at least one linear or branched organic group selected from the group consisting of -C₂H₄-, -C₃H₆-, -C₄H₈-and -CH₂-CHPh-; and i, j, m and n are each independently a natural number, and
(D) a compound represented by the following formulae (19) and/or (20) 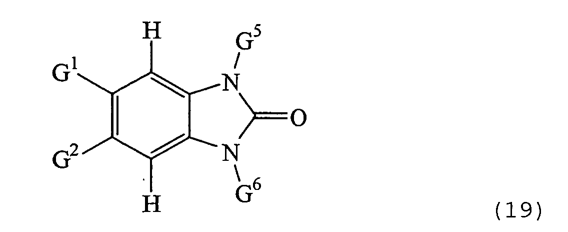 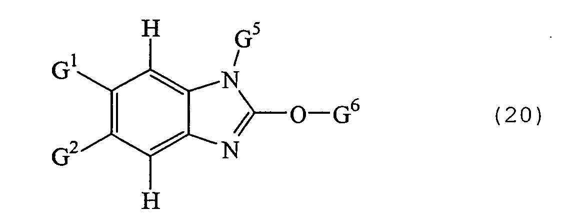
in which G¹ and G² are each independently H or a linear or cyclic hydrocarbon group of 1 to 20 carbon atoms provided that G¹ and G² are not H simultaneously; G⁵ is an atom or substituent selected from the group consisting of H, -(R²³O)ₘ-H and -(R²¹O)ᵢ-(R²³O)ₘ-H, G⁶ is an atom or substituent selected from the group consisting of H, -(R²⁴O)ₙ-H and -(R²²O)ⱼ-(R²⁴O)ₙ-H, and -(R²¹O)ᵢ- and -(R²²O)ⱼ- are each a substituent derived from the starting materials, provided that G⁵ and G⁶ may be the same or different from each other, but are not H simultaneously; R²¹, R²², R²³ and R²⁴ are each independently at least one linear or branched organic group selected from the group consisting of -C₂H₄-, -C₃H₆-, -C₄H₈-and -CH₂-CHPh-; and i, j, m and n are each independently a natural number.

The polyoxyalkylene polyol used in the present invention desirably has a hydroxyl number of 10 to 500 mgKOH/g, preferably 15 to 480 mgKOH/g, more preferably 20 to 430 mgKOH/g.

The weight ratio (C/D) of the compound(s) (C) to the compound(s) (D) in the above mixture is usually from 1/99 to 99/1, preferably 25/75 to 75/25, more preferably 35/65 to 65/35.

### (Thermoplastic Polymer Compound)

The thermoplastic polymer compound having a repeating unit (a) represented by the formula (1) can be prepared by reacting the polyoxyalkylene diol prepared in the above process with the compound having a bivalent organic group using the catalyst and the like. In this reaction, the compound having a bivalent organic group can be used in an amount such that the molar ratio of a functional group in the compound to all of active hydrogens in the polyoxyalkylene diol is usually from 0.8 to 1.2, preferably 0.9 to 1.1, more preferably 0.95 to 1.05.

The thermoplastic polymer compound thus prepared is a linear polymer. When the above compound having a bivalent organic group is a diisocyanate compound, the bonding of the structural unit C with the structural units A¹ and A² is urethane bonding. When the above compound having a bivalent organic group is a dicarboxylic acid or dicarboxylic acid dihalide, the bonding of the structural unit C with the structural units A¹ and A² is ester bonding. When the above compound having a bivalent organic group is a carbonate compound, the bonding of the structural unit C with the structural units A¹ and A² is carbonate bonding. When the above compound having a bivalent organic group is a diol or a dihalide given by substituting a hydroxyl group in diol with halogen, the bonding of the structural unit C with the structural units A¹ and A² is ether bonding.

The thermoplastic polymer compound thus prepared has excellent compatibility with thermoplastic resins such as polyolefins. As a result, even when this thermoplastic polymer compound is added to a thermoplastic resin, it is possible to keep the transparency of the thermoplastic resin.

The thermoplastic polymer compound of the present invention may be a copolymer having a repeating unit (a) represented by the formula (1) and a repeating unit represented by the following formula (12) (hereinafter referred to " repeating unit (b)"),

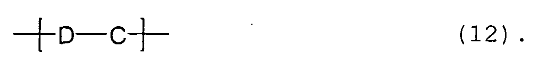

In the formula (12), the structural unit C is a bivalent organic group capable of binding to the structural unit D and the structural units A¹ and A² in the formula (1). This structural unit C is the same as the above structural unit C.

The structural unit D is preferably a bivalent group containing at least one hydrocarbon group of 1 to 20 carbon atoms and obtained from a hydrocarbon-based diol HO-D-OH having a number-average molecular weight of 100 to 4800.

The molar ratio (a/b) of the repeating unit (a) to the repeating unit (b) is preferably from 0.35/0.65 to 0.99/0.01. When the a molar ratio of the repeating units is in the above range, the dispersibility becomes good in the addition of the thermoplastic polymer compound of the present invention to thermoplastic resins, and thereby a homogenous thermoplastic resin composition can be prepared having

Examples of the hydrocarbon-based diol HO-D-OH include:
(a) polyoxyalkylene diols given by addition-polymerization of an alkylene oxide having 3 to 20 carbon atoms in the presence of a basic or acidic catalyst,
(b) a comb-shaped diols given by adding an alkylene oxide of 3 to 20 carbon atoms to a compound having one primary amino group in the molecule in the absence of a catalyst, as described in Japanese Laid-open Publication No. 2003-026867,
(c) diols given by graft-polymerization of a monomer having an ethylenically unsaturated group to a polyoxyalkylene diol,
(d) diols given by reducing a dimer acid, such as Pripol series (available from Uniqema),
(e) polybutadiene diols, such as Nisso PB (Trade Name, available from Nippon Soda Co., Ltd.), and
(f) telechelic oligomers having hydroxyl groups at the both ends of the molecule, such as TOE-2000H (Trade Name, available from Kyowa Hakko Kogyo Co., Ltd.).

Examples of alkylene oxides of 3 to 20 carbon atoms used for the diols (a) and (b) include butylene oxide, styrene oxide, phenylglycidyl ether, 2-ethylhexylglycidyl ether (such as ADEKA GLYCIROL, available from Asahi Denka Co., Ltd) and epoxides having a long-chain alkyl group of 12 to 18 carbon atoms (such as AOE series available from Daicel Chemical Industries, Ltd). These alkylene oxides may be used singly or in combination with two or more, and further may be copolymerized with propylene oxide or ethylene oxide.

Examples of the comb-shaped diols used for the diols (b) include diols represented by the following formulae (29) to (32).

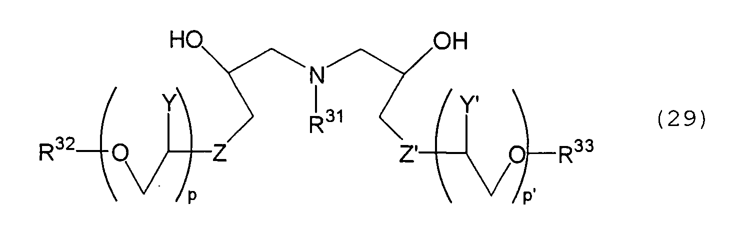

The comb-shaped diols are represented by the formula (29) and have two secondary hydroxyl groups in the molecule and three hydrophobic chains in the molecule.

In the formula (29), R³¹ is a hydrocarbon group such as alkyl group, alkenyl group, aralkyl group or aryl group, of 1 to 20 carbon atoms, or a nitrogen-containing hydrocarbon group such as dialkylaminoalkyl group, more preferably a straight-chain or branched-chain alkyl group having a total carbon atom number of from 4 to 18.

R³² and R³³ are each a hydrocarbon group such as alkyl group, alkenyl group, aralkyl group or aryl group, of 4 to 21 carbon atoms, more preferably a straight-chain or branched-chain alkyl group having a total carbon atom number of from 4 to 18.

Further, a part or all of hydrogen atoms in the hydrocarbon groups R³¹, R³² and R³³ may be substituted with a halogen atom such as fluorine, chlorine, bromine or iodine. R³² and R³³ may be the same or different from each other, and further, they are preferably the same.

Y and Y' are each hydrogen, a methyl group or a CH₂Cl group. Y and Y' may be the same or different from each other, and further, they are preferably the same.

Z and Z' are each oxygen, sulfur or a CH₂ group. Z and Z' may be the same or different from each other, and further, they are preferably the same. Z and Z' are more preferably oxygen atoms together.

p is an integer of 0 to 15 when Z is oxygen, while p is 0 when Z is sulfur or a CH₂ group. p' is an integer of 0 to 15 when Z' is oxygen, while p' is 0 when Z' is sulfur or a CH₂ group. p and p' may be the same or different from each other, and further, they are preferably the same.

Further, preferable structure of the comb-shaped diols is represented by the formula (30).

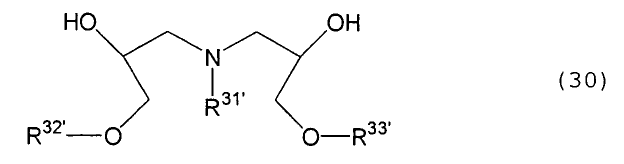

In the formula (30), R³¹' is a straight-chain or branched-chain alkyl group having 4 to 18 carbon atoms. R³²' and R³³' are each a straight-chain or branched-chain alkyl group having 4 to 18 carbon atoms. R³²' and R³³' are the same.

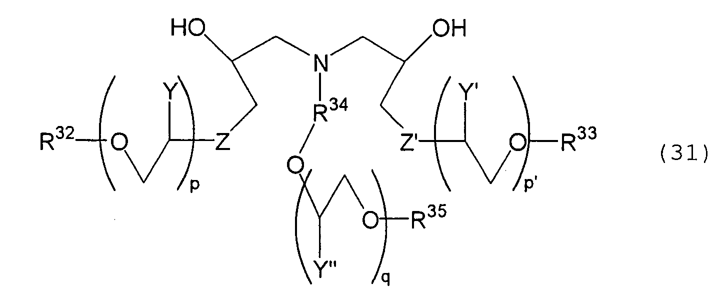

In the formula (31), R³⁵ is a hydrocarbon group such as alkyl group, alkenyl group, aralkyl group or aryl group, of 1 to 20 carbon atoms, more preferably a straight-chain or branched-chain alkyl group having 4 to 18 carbon atoms.

R³² and R³³ are the same as those in the formula (29), and each a hydrocarbon group such as alkyl group, alkenyl group, aralkyl group or aryl group, of 4 to 21 carbon atoms, more preferably a straight-chain or branched-chain alkyl group having 4 to 18 carbon atoms.

Further, a part or all of hydrogen atoms in the hydrocarbon groups R³⁵, R³² and R³³ may be substituted with a halogen atom such as fluorine, chlorine, bromine or iodine. R³² and R³³ may be the same or different from each other, and further, they are preferably the same.

Y, Y' and Y" are each hydrogen, a methyl group or a CH₂Cl group. Y, Y' and Y" may be the same or different from each other, and further, they are preferably the same.

R³⁴ is an alkylene group having a total carbon atom number of 2 to 4, and q is an integer of 0 to 15.

p is an integer of 0 to 15 when Z is oxygen, while p is 0 when Z is sulfur or a CH₂ group. p' is an integer of 0 to 15 when Z' is oxygen, while p' is 0 when Z' is sulfur or a CH₂ group. p and p' may be the same or different from each other, and further, they are preferably the same.

More preferable structure of comb-shaped diols is represented by the formula (32).

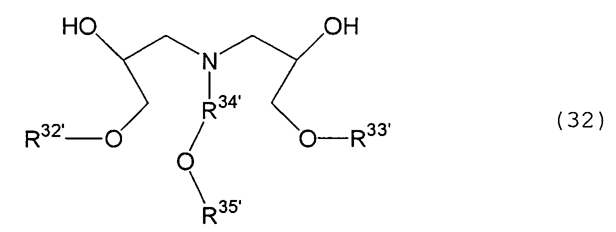

In the formula (32), R³⁵' is a straight-chain or branched-chain alkyl group having 1 to 18 carbon atoms. R³²' and R³³' are each a straight-chain or branched-chain alkyl group having 4 to 18 carbon atoms. R³²' and R³³' are the same. R³⁴' is 1,2-ethylene group, 1,3-propylene group or 1,4-butylene group.

The polyoxyalkylene diol used for the diol (c) preferably has a methine proton capable of generating radicals in the presence of a radical initiator such as organoperoxides. The monomer having an ethylenically unsaturated group is preferably an aromatic monomer such as styrene or vinylpyridine, and further it is possible to use monomers having an ethylenically unsaturated group such as acrylonitrile, acrylamide or (meth)acrylate, capable of copolymerizing with the above aromatic monomer. Examples of the radical initiator include dialkyl peroxides, diacyl peroxides, dicarbonate peroxides, ester peroxides, ketone peroxides, peroxide hydroxides and ketal peroxides.

### <Urethane resin>

The polyoxyalkylene polyol can form an urethane resin by reacting with an organoisocyanate compound optionally using a forming agent. This preparation method of the urethane resin is not particularly limited and it is possible to employ usual preparation methods of urethane resins.

In the preparation of the urethane resin, it is possible to optionally add a chain extender, catalyst, foaming agent, cross-linking agent, curing accelerator, light stabilizer, plasticizer, antioxidant, heat stabilizer, filler, color-protecting agent, pigment and other additives.

The above urethane resin can be used for various applications, for example, urethane resin raw materials for flexible and rigid polyurethane foams and elastomers, paints, sealing materials, floor materials, adhesives and the like; and compatibilizing agents, dispersing agents, antifogging agents, antistatic agents, lubricating oils, deashing agents, surfactants or the like, for various resins.

Each component used for preparing the urethane resin of the present invention is described below.

### (Organoisocyante Compound)

As the organoisocyanate compound usable in the present invention, any one of organoisocyanate compounds can be used as long as it can be used for usual preparation of urethane resins, and examples of the organoisocyanate compounds include aliphatic polyisocyanate compounds, alicyclic polyisocyanate compounds and aromatic polyisocyanate compounds. Specific examples of the polyisocyanate compound include the diisocyanate compounds as described above.

### (Foaming Agent)

The foaming agent used in the present invention is not limited particularly as long as it can be used for preparing usual urethane resins, for example, hydrochlorofluorocarbons, hydrocarbons, water and carbon dioxide.

### (Chain Extender)

The chain extender usable in the present invention is not limited particularly as long as it can be used for preparing usual urethane resins, for example, aliphatic diols such as 1,4-butane diol, aromatic ether diols such as bis(hydroxyethoxy)benzene, and aromatic ester diols such as bis(hydroxyethyl)terephthalate.

### (Catalyst for Preparing Urethane Resins)

The catalyst for preparing urethane resins usable in the present invention is not limited particularly as long as it can be used for preparing usual urethane resins without particular limitation, for example, amines, aziridines, quaternary ammonium compounds, alkali metal salts, lead compounds, tin compounds, alcoholate compounds, phenolate compounds, metal halide compounds and metal complex compounds.

Examples of the usable amines include trimethylaminoethylpiperazine, triethylamine, tripropylamine, N-methylmorpholine, N-ethylmorpholine, triethylenediamine, tetramethylhexamethylenediamine, dimethylcyclohexylamine, diazobicycloundecene and 1,3,5-tris(dimethylaminopropyl)hexahydro-S-ethylaziridine.

Examples of the usable quaternary ammonium compound include carboxylates of tertiary amine.

Examples of the usable alkali metal salts include potassium octylate and sodium acetate.

Examples of the usable lead compounds include lead naphthenate and lead octylate.

Examples of the usable tin compound include dibutyltin diacetate and dibutyltin dilaurate.

Examples of the usable alcoholate include sodium methoxide and sodium ethoxide.

Examples of the usable phenolate include potassium phenoxide, lithium phenoxide and sodium phenoxide.

Examples of the usable metal halides include iron chloride, zinc chloride, zinc bromide and tin chloride.

Examples of the usable metal complex compounds include metal complex compounds such as metal salts of acetyl acetone.

These catalysts may be used singly or in combination with two or more.

### (Other Additives)

The cross-linking agent, curing accelerator, light stabilizer, plasticizer, antioxidant, heat stabilizer, filler, color-protecting agent, pigment and other additives used in the present invention are not particularly limited and additives used in the preparation of usual urethane resins can be used.

### <Thermoplastic polymer composition>

The thermoplastic polymer composition of the present invention comprises the above thermoplastic polymer compound and an inorganic salt of alkali metals or alkali earth metals.

Examples of the inorganic salt of alkali metals include fluorides, chlorides, bromides, iodides, hydroxides, carbonates, sulfates, thiosulfates, nitrates, nitrites, thiocyanides, perchlorates, hypochlorites, borates, iodates, periodates, hexafluorosilicates, silicates, phosphates, oxides and peroxides, of lithium, sodium, potassium, rubidium or cesium.

Examples of the inorganic salt of alkali earth metals include fluorides, chlorides, bromides, iodides, hydroxides, carbonates, sulfates, nitrates, nitrites, thiocyanides, perchlorates, borates, iodates, periodates, hexafluorosilicates, silicates, phosphates, oxides, peroxides and titanates, of magnesium, calcium or strontium.

The thermoplastic polymer composition preferably contains the inorganic salt of alkali metal or alkali earth metal in an amount of from 0.001 to 10 parts by weight based on 100 parts by weight of the thermoplastic polymer compound.

The thermoplastic polymer composition has excellent antistatic properties and also excellent transparency.

### <Antistatic agent>

The antistatic agent of the present invention contains the above thermoplastic polymer compound or the above thermoplastic polymer composition. This antistatic agent does not cause bleedout, and can be used as a permanent antistatic agent and also has excellent transparency. In particular, when the thermoplastic polymer composition containing the inorganic salt of alkali metal or alkali earth metal is used as an antistatic agent, the antistatic agent has stable antistatic properties for a long period of time and can prevent deterioration of transparency which has been a problem in conventional antistatic agents, because the thermoplastic polymer compound has retention properties to inorganic salts of alkali metals or the like. That is, the antistatic agent has excellent transparency even when containing inorganic salts of alkali metals or the like.

### <Resin composition>

The resin composition of the present invention comprises the above thermoplastic polymer compound or the above thermoplastic polymer composition, and at least one kind of thermoplastic resins selected from polyolefins, ethylene vinylacetate copolymers, ethylene ethyl(meth)acrylate copolymers and ethylene (meth)acrylic acid copolymers. The polymers may be used singly or in combination with two or more.

Examples of the polyolefin include olefin homopolymers such as ethylene homopolymer, propylene homopolymer, 1-butene homopolymer and 4-methyl-1-pentene homopolymer; and ethylene·α-olefin copolymers.

The resin composition of the present invention contains the above thermoplastic polymer compound in an amount of 0.1 to 50 parts by weight, preferably 0.5 to 20 parts by weight, more preferably 1 to 15 parts by weight based on 100 parts by weight of the thermoplastic resin. The resin composition containing the thermoplastic polymer compound of the present invention in the above amount has excellent transparency and can prevent causing a haze difference between the thermoplastic polymer compound and the thermoplastic resin. In particular, the proportion of the structural unit B in the thermoplastic polymer compound is adjusted to be from 10 to 30 % by weight, the number-average molecular weight of the structural units A¹ and A² are adjusted to be from 50 to 1000 and aliphatic diisocyanate is used as the compound having a bivalent organic group, so that the difference between the haze of the resin composition and the haze of the thermoplastic resin can be reduced to be not more than 5.

### EXAMPLES

The present invention will be described with reference to the following examples below, but the invention should not be limited by the examples. In the examples, "part" and "%" denote "part by weight" and "% by weight" respectively, unless otherwise noted.

### <Method for Evaluating Properties>

### (1) Measurement of Isomer Ratio

With regard to methyl-2(3H)-benzimidazolone and polyoxyalkylene diol, the structure was confirmed by measurement using 13C-NMR under the following measuring conditions and then the isomer ratio was determined.

The chemical shift of methyl group ((compound A /compound B) or (compound C / compound D)) = 16.2 ppm / 21.1 ppm
Measuring equipment: JEOL JNM-AL400
Measuring frequency: 400 MHz
Solvent for measurement: DMSO-d6

### (2) Hydroxyl Number and Viscosity

The hydroxyl number and viscosity were measured by the method as described in JIA K-1557.

### (3) Molecular Weight of Polyurethane Resin

The number-average molecular weight in terms of polystyrene was measured by the gel permeation chromatography (GPC) as described below.
Equipment: HLC-8220 GPC manufactured by Tosoh Corp.
Column: TSK gel ALPHA-M x 2 + Guard Column
Column temperature: 40°C
Detector: RI
Eluent: Dimethylformamide (lithium bromide 0.01 mol/liter) Flow rate of eluent: 0.6 mL/min
Standard sample: standard polystyrene (available from Tosoh Corp.)

### (4) Haze

A polyethylene sheet having a thickness of 0.5 mm was formed with adding the thermoplastic polymer compound, and the haze thereof was measured by the method as described in JIS K-7105.

### (5) Surface Intrinsic Resistance

The surface intrinsic resistance was measured in accordance with the method as described in JIS K-6911. Equipment: R8340A (manufactured by ADVANTEC)
Conditions: 50 %RH, 23°C, applied voltage 500 V

### (6) Surface Hydrophobicity

The water contact angle was measured and was regarded as a measure of surface hydrophobicity.
Equipment: CA-X type contact angle meter (manufactured by Kyowa Interface Science Co., Ltd.)

### (7) Refractive Index

The refractive index was measured at 23°C using Abbe refractometer.

### <Preparation Example 1>

### (Synthesis of methyl-2-(3H)-benzimidazolone)

Ortho-toluenediamine (available from Mitsui Takeda Chemicals, Inc.), which consists essentially of 41.6 % by weight of 2,3-diaminotoluene, 57.4 % by weight of 3,4-diaminotoluene, 0.51 % by weight of toluidine, 0.24 % by weight of 2,4-meta-toluenediamine, 0.19 % by weight of 2,6-meta-toluenediamine and 0.05 % by weight of 2,5-para-toluenediamine, was purified by distillation. The purified ortho-toluenediamine was confirmed by a gas chromatography to be an isomer mixture containing 2,3-diaminotoluene and 3,4-diaminotoluene, the mixture consisting essentially of 44 % by weight of 2,3-diaminotoluene (compound A), 56 % by weight of 3,4-diaminotoluene (compound B), 0.0% by weight of toluidine, 0.0 % by weight of meta-toluenediamine, 0.0 % by weight of para-toluenediamine.

COCl₂ was prepared by reacting carbon monoxide with chlorine gas using activated carbon as a catalyst and then condensing by cooling.

Into a 2L four-necked flask equipped with a stirrer, a thermometer and a pH meter, 146.6 g (1.2 mol) of the purified ortho-toluenediamine, 121.5 g (1.2 mol) of a 36% hydrochloric acid aqueous solution (superhigh grade, available from Tokyo Kasei Kogyo Co., Ltd.) and 960 g of distilled water were poured, stirred for 15 min and dissolved homogeneously. 118.7 g (1.2 mol) of COCl₂ was fed over 3 hr. In this addition, 672.3 g (3.3 mol) of a 20% sodium hydroxide aqueous solution (sodium hydroxide having a purity of 96 % was diluted with distilled water and then submitted to use, available from Tokyo Kasei Kogyo Co., Ltd.) was dropped in order to maintain the reaction solution at a pH of 2.7 to 3.3 at a temperature of 30 to 40°C. The slurry reaction product was filtered off with a 5A filter paper and the solid product was thoroughly washed with distilled water. The resulting wet filter cake was analyzed by a gas chromatography. As a result, the raw material of ortho-toluenediamine was not detected. The wet filter cake was dried at 75°C under a reduced pressure of 1.3 kPa to prepare 148.1 g of the dried filter cake (yield 83.3%). The dried filter cake contained 537 ppm of a chlorine residue as impurities. The resulting dried filter cake was analyzed by 13C-NMR. As a result, the weight mixing ratio of 4-methyl-2(3H)-benzimidazolone (compound C) / 5-methyl-2(3H)-benzimidazolone (compound D) was 39/61. This mixture (molecular weight 148.16) of 4-methyl-2(3H)-benzimidazolone and 5-methyl-2(3H)-benzimidazolone was used for the following preparation examples as a starting material MBI.

The structural unit B represented by the following formula derived from methylbenzimidazolone 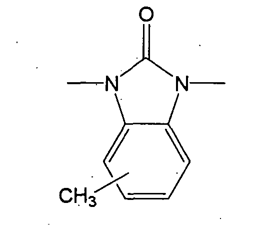 had a partial structure refractivity of 24. The compound represented by the following formula 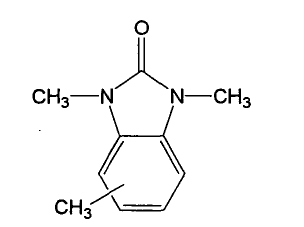 had a dipole moment of 3.5D to 4.5D, as determined using the calculation procedure AMI and a threshold of molecular strain of GNORM = 0.3 by MOPAC2002 (produced by Fujitsu).

### <Preparation Example 2>

### (Preparation of polyoxyalkylene diol a)

Into a 1000 mL four-necked flask equipped with a stirrer, a cooling tube and a thermometer, 148 g (1.0 mol) of the starting material MBI, and as a catalyst, 2.69 g (0.01 mol) of dimethylpalmitylamine (Trade Name: FARMIN DM60, available from Kao Corp.) and 1.17 g (0.020 mol) of potassium hydroxide (purity: 96.0 % by weight, available from Nippon Soda Co., Ltd.) and as s solvent, 600 g of dimethylsulfoxide were placed and stirred at 100°C for 5 hr in a nitrogen atmosphere to prepare a homogeneous solution. 753 g of the resulting solution was introduced into a 1.5 L autoclave equipped with a thermometer, a pressure gauge and a stirrer and purged with nitrogen. Thereafter, 7.7 mol of propylene oxide (available from NIHON OXIRANE Co., Ltd.) was added per 1 mol of the starting material MBI and addition-polymerization was performed at a reaction temperature of 90 to 110°C. In the polymerization, the reaction pressure was started from a reduced pressure of 1.33 kPa and the maximum pressure was 392 kPa (4 kg/cm²). After the change in the pressure inside the autoclave was not observed, unreacted monomers and the solvent were removed at 120°C under a pressure of not more than 1.33 kPa and thereby crude polyoxyalkylene diol was prepared.

To the crude polyoxyalkylene diol, 1.05 mol in terms of phosphoric acid of a 75.1 % by weight phosphoric acid aqueous solution based on 1 mol of potassium contained in the crude diol and 5 parts by weight of ion-exchanged water based on 100 parts by weight of the crude polyol were added, and neutralization reaction was carried out at 90°C for 2 hr. To 100 parts by weight of the crude polyoxy alkylene diol, 0.06 part by weight of 2,6-di-tert-butyl-p-crezol (hereinafter abbreviated to BHT) was added as an antioxidant, and thereafter dehydration was carried out under reduced pressure. When the pressure inside the autoclave reached at 26.6 kPa, 5000 ppm of an adsorbent AD-600NS (available from Tomita Pharmaceutical Co., Ltd.) was added. Furthermore, water was distilled off under reduced pressure and finally dehydration was carried out at 105°C under a pressure of 1.33 kPa for 5 hr. To the autoclave, nitrogen was fed and thereby the pressure inside the autoclave was recovered to atmospheric conditions. Thereafter, using a 5C filter paper (manufactured by ADVANTEC Toyo Kaisha., Ltd., retention particle size of 1 µm), filtration under pressure was carried out and thereby 540 g of polyoxy alkylene diol a was prepared.

The polyoxyalkylene diol a had a hydroxyl number of 188 mgKOH/g and a viscosity as measured by a Brookfield viscometer of 5000 mPa·s (25°C). The isomer ratio of the compound (C)/ the compound (D) as determined by 13C-NMR was 43/57.

### <Preparation Example 3>

### (Preparation of polyoxyalkylene diol b)

Crude polyoxyalkylene diol was prepared in the same manner as in Preparation Example 2, except that after the inside of an autoclave was purged with nitrogen, instead of the propylene oxide, 4.2 mol of propylene oxide and 3.1 mol of ethylene oxide were added based on 1 mol of the starting material MBI, and addition-polymerization was started under a reduced reaction pressure of 1.33 kPa and performed at the maximum reaction pressure of 400 kPa (0.4 MPaG).

Thereafter, post-treatment was carried out in the same manner as in Preparation Example 2 to prepare 500 g of polyoxyalkylene diol b.

The polyoxyalkylene diol b had a hydroxyl number of 214 mgKOH/g and a viscosity, as measured by a Brookfield viscometer, of 4700 mPa·s (25°C).

### <Preparation Example 4>

### (Preparation of polyoxyalkylene diol c)

Into a 1 L autoclave equipped with a thermometer, a pressure gauge and a stirrer, 119 g (0.80 mol) of a starting material MBI and 1.40 g (0.024 mol) of potassium hydroxide as a catalyst were placed. After purging with nitrogen, 16.2 mol of propylene oxide was added based on 1 mol of the starting material, and then addition-polymerization was performed in the same manner as in Preparation Example 2, to prepare crude polyoxyalkylene diol. Thereafter, post-treatment was carried out in the same manner as in Preparation Example 2 to prepare 860 g of polyoxyalkylene diol c.

The polyoxyalkylene diol c had a hydroxyl number of 103 mgKOH/g and a viscosity, as measured by a Brookfield viscometer, of 870 mPa·s (25°C).

### <Preparation Example 5>

### (Preparation of polyoxyalkylene diol d)

Into a 1 L autoclave equipped with a thermometer, a pressure gauge and a stirrer, 119 g (0.80 mol) of a starting material MBI and 1.40 g (0.024 mol) of potassium hydroxide as a catalyst were placed. After purging with nitrogen, 18.8 mol of ethylene oxide was added based on 1 mol of the starting material MBI, and then addition-polymerization was performed in the same manner as in Preparation Example 2, to prepare crude polyoxyalkylene diol. Thereafter, post-treatment was carried out in the same manner as in Preparation Example 2 to prepare 770 g of polyoxyalkylene diol d.

The polyoxyalkylene diol d had a hydroxyl number of 115 mgKOH/g and a viscosity, as measured by a Brookfield viscometer, of 680 mPa·s (25°C).

### <Preparation Example 6>

### (Preparation of polyoxyalkylene diol e)

Into a 1 L autoclave equipped with a thermometer, a pressure gauge and a stirrer, 222 g (1.5 mol) of a starting material MBI and 5.26 g (0.090 mol) of potassium hydroxide as a catalyst were placed. After purging with nitrogen, 7.5 mol of ethylene oxide was added based on 1 mol of the starting material MBI, and then addition-polymerization was performed in the same manner as in Preparation Example 2, to prepare crude polyoxyalkylene diol. Thereafter, post-treatment was carried out in the same manner as in Preparation Example 2 to prepare 710 g of polyoxyalkylene diol e.

The polyoxyalkylene diol e had a hydroxyl number of 235 mgKOH/g and a viscosity, as measured by a Brookfield viscometer, of 1800 mPa·s (25°C).

### <Preparation Example 7>

### (Preparation of polyoxyalkylene diol f)

Into a 1 L autoclave equipped with a thermometer, a pressure gauge and a stirrer, 74 g (0.5 mol) of a starting material MBI and 1.75 g (0.030 mol) of potassium hydroxide as a catalyst were placed. After purging with nitrogen, 39.9 mol of ethylene oxide was added based on 1 mol of the starting material MBI, and then addition-polymerization was performed in the same manner as in Preparation Example 2, to prepare crude polyoxyalkylene diol. Thereafter, post-treatment was carried out in the same manner as in Preparation Example 2 to prepare 940 g of polyoxyalkylene diol f.

The polyoxyalkylene diol f had a hydroxyl number of 59 mgKOH/g and was in a solid state (25°C).

### <Preparation Example 8>

### (Preparation of Diol g)

Into a 1 L four-necked flask equipped with a stirrer, a thermometer, a dropping funnel and a cooling tube, 129 g (1.0 mol) of 2-ethylhexylamine (available from Tokyo Kasei Kogyo Co., Ltd.) was poured and the inside of the flask was purged with nitrogen. The flask was heated to 70°C by an oil bath and the 373 g (2.0 mol) of 2-ethylhexylglycidyl ether (available from Tokyo Kasei Kogyo Co., Ltd.) was slowly dropped through the dropping funnel with stirring in such a manner that the temperature of a product was not over 80°C. After completion of the dropping, the temperature of the oil bath was elevated to 80°C, followed by heating the flask for 5 hr. Successively, unreacted materials were distilled off under reduced pressure at a degree of vacuum of 1.33 kPa to prepare 492 g of diol g (yield 98 %). The diol g has a hydroxyl number of 219 mgKOH/g.

Furthermore, as comparative polyoxyalkylene diols, the following polyoxyalkylene diols h to m were used. Polyoxyalkylene diol h:
Polyoxyalkylene diol (KB-280, available from Mitsui Takeda Chemicals, Inc.) which was prepared by adding propylene oxide to bisphenol A as a starting material, and had a hydroxyl number of 286 mgKOH/g, a viscosity of 100000 mPa·s/25°C
   Polyoxyalkylene diol i:
Polyoxyalkylene diol (BEO-4, available from Mitsui Takeda Chemicals, Inc.) which was prepared by adding ethylene oxide to bisphenol A as a starting material, and had a hydroxyl number of 280 mgKOH/g, a viscosity of 13000 mPa·s/25°C
   Polyoxyalkylene diol j:
Polyethylene glycol (reagent, available from Tokyo Kasei Kogyo Co., Ltd.) having a hydroxyl number of 280 mgKOH/g, a viscosity of 100 mPa·s/25°C
   Polyoxyalkylene diol k:
Polypropylene glycol (Diol-400, available from Mitsui Takeda Chemicals, Inc.) having a hydroxyl number of 281 mgKOH/g, a viscosity of 70 mPa·s/25°C
   Polyoxyalkylene diol 1:
Polyethylene glycol (reagent, available from Tokyo Kasei Kogyo Co., Ltd.) having a hydroxyl number of 112 mgKOH/g and being in a solid state at room temperature Polyoxyalkylene diol m:
Polypropylene glycol (Diol-1000, available from Mitsui Takeda Chemicals, Inc.) having a hydroxyl number of 112 mgKOH/g, a viscosity of 70 mPa·s/25°C

The diols used in Examples and Comparative examples are shown in Tables 1 and 2.

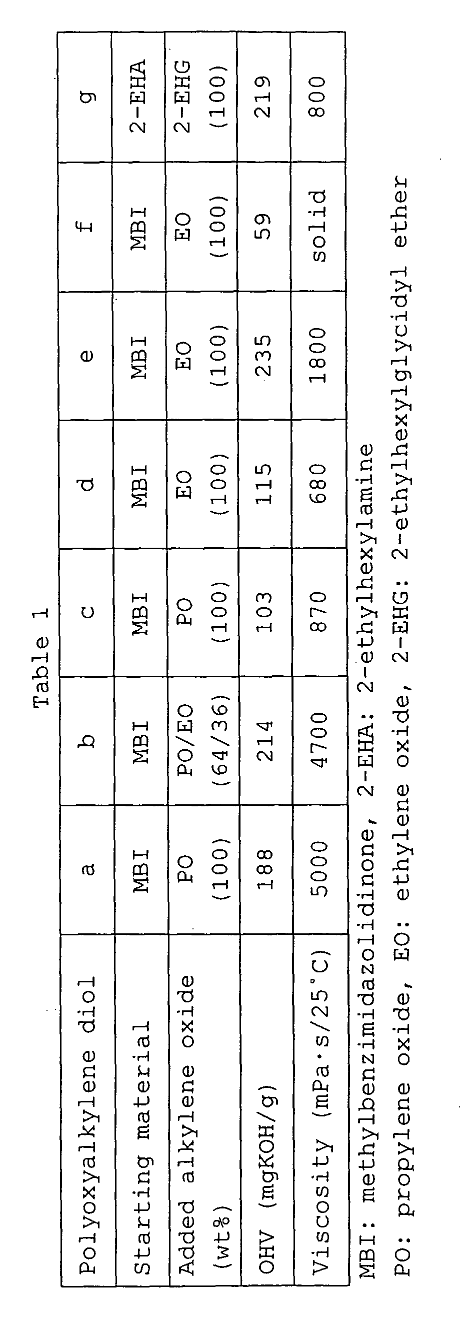

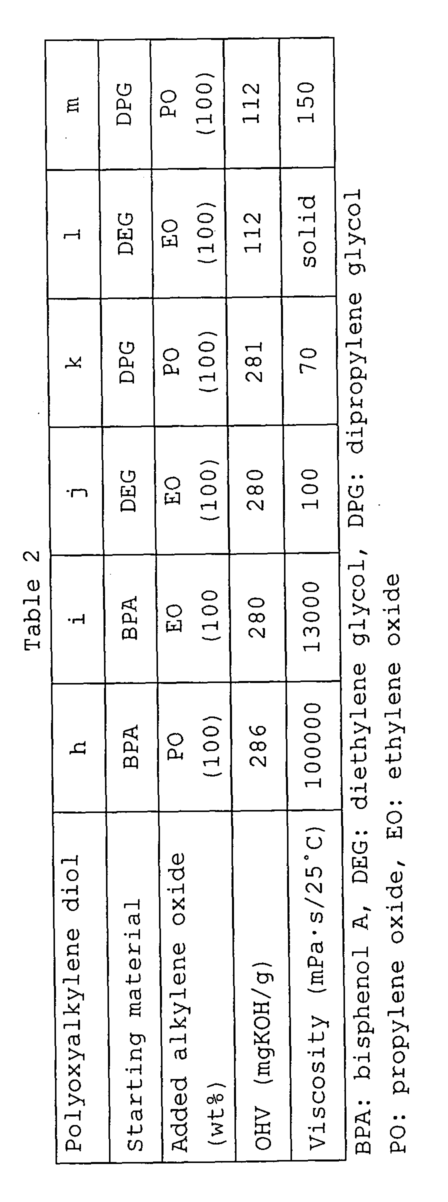

### <Example 1>

### (Preparation of polyurethane resin (thermoplastic polymer compound))

To a 500 mL separable flask equipped with a stirrer, a thermometer and a cooling tube, 100.0 parts by weight of polyoxypropylene diol a was poured and heated at 140°C under sealing with nitrogen. Dehydration operation was carried out under a reduced pressure of 1.33 kPa for 2 hr with stirring. The moisture of the content was not more than 200 ppm. The temperature was decreased to 50°C and then 50.7 parts by weight (NCO/active hydrogen molar ratio; index=0.9) of hexamethylene diisocyanate (available from Tokyo Kasei Kogyo Co., Ltd.) was fed with stirring and 0.3 mL of DBTDL (10 % triethylene glycol dimethyl ether solution) was added as a catalyst. After the reaction for 2 hr, the temperature was adjusted to 120°C, followed by reaction for 2 hr. The product was cooled to room temperature to give a viscous liquid polyurethane resin A-1. By the analysis with 1H-NMR, it was confirmed that a urea group, allophanate group and biuret group were hardly formed. By the analysis with IR, it was also confirmed that NCO group was almost disappeared. The resulting polyurethane resin A-1 had a number-average molecular weight, as determined by GPC, of 10900 in terms of polystyrene. The results are shown Table 3.

### <Examples 2 to 7>

Polyurethane resins A-2, B-1, C-1, D-1, E-1 and F-1 were prepared in the same manner as in Example 1 using polyoxyalkylene diols a to g, and hexamethylene diisocyanate or norbornene diisocyanate (available from Mitsui Takeda Chemicals, Inc.), as shown in Table 3. The results are shown in Table 3.

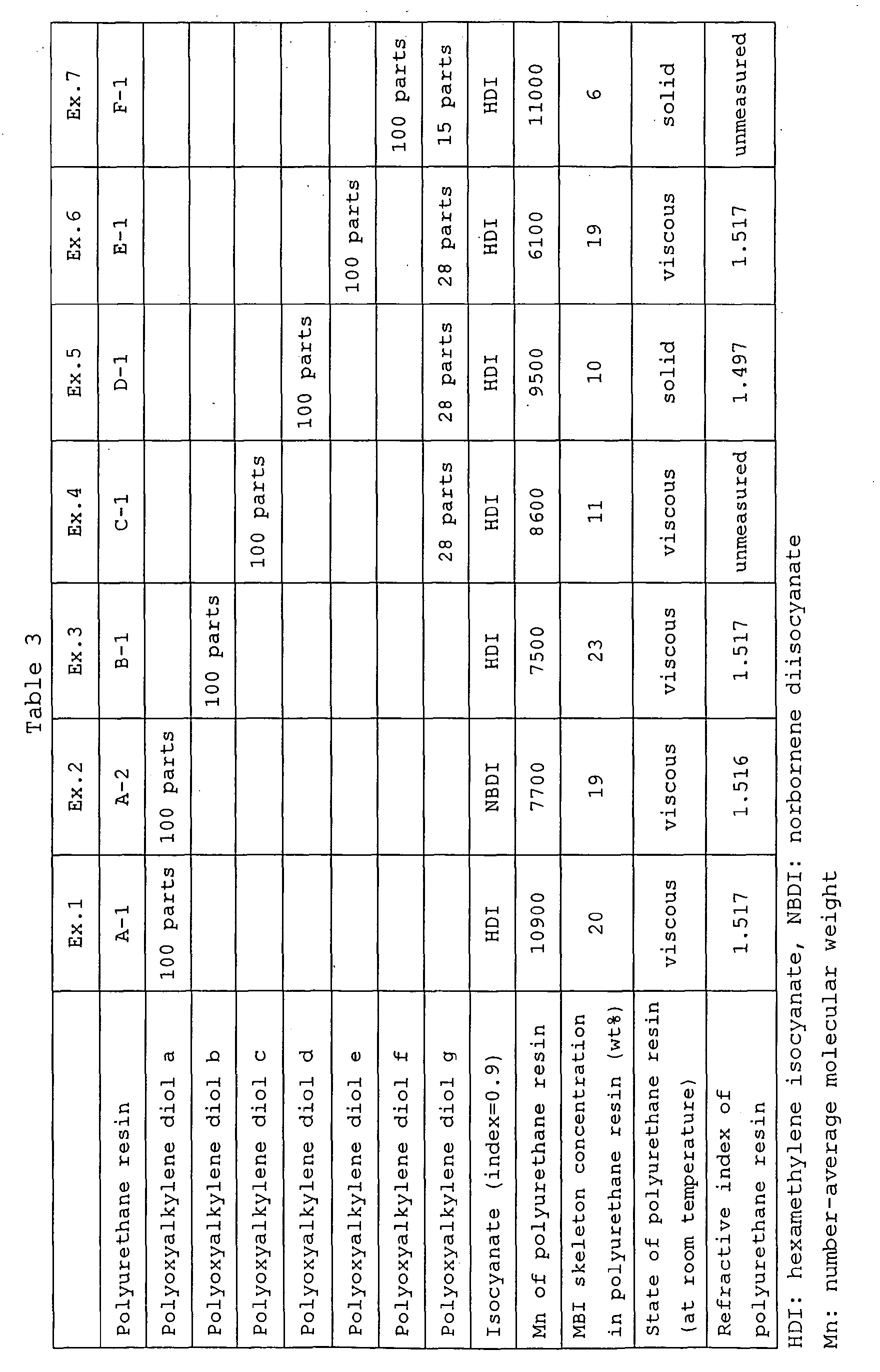

### <Comparative Examples 1 to 8>

Polyurethane resins H-1, I-1, J-1, K-1, L-1 and M-1 were prepared in the same manner as in Example 1 using polyoxyalkylene diols g to m, and hexamethylene diisocyanate or norbornene diisocyanate (NBDI, available from Mitsui Takeda Chemicals, Inc.), as shown in Table 4. The results are shown in Table 4.

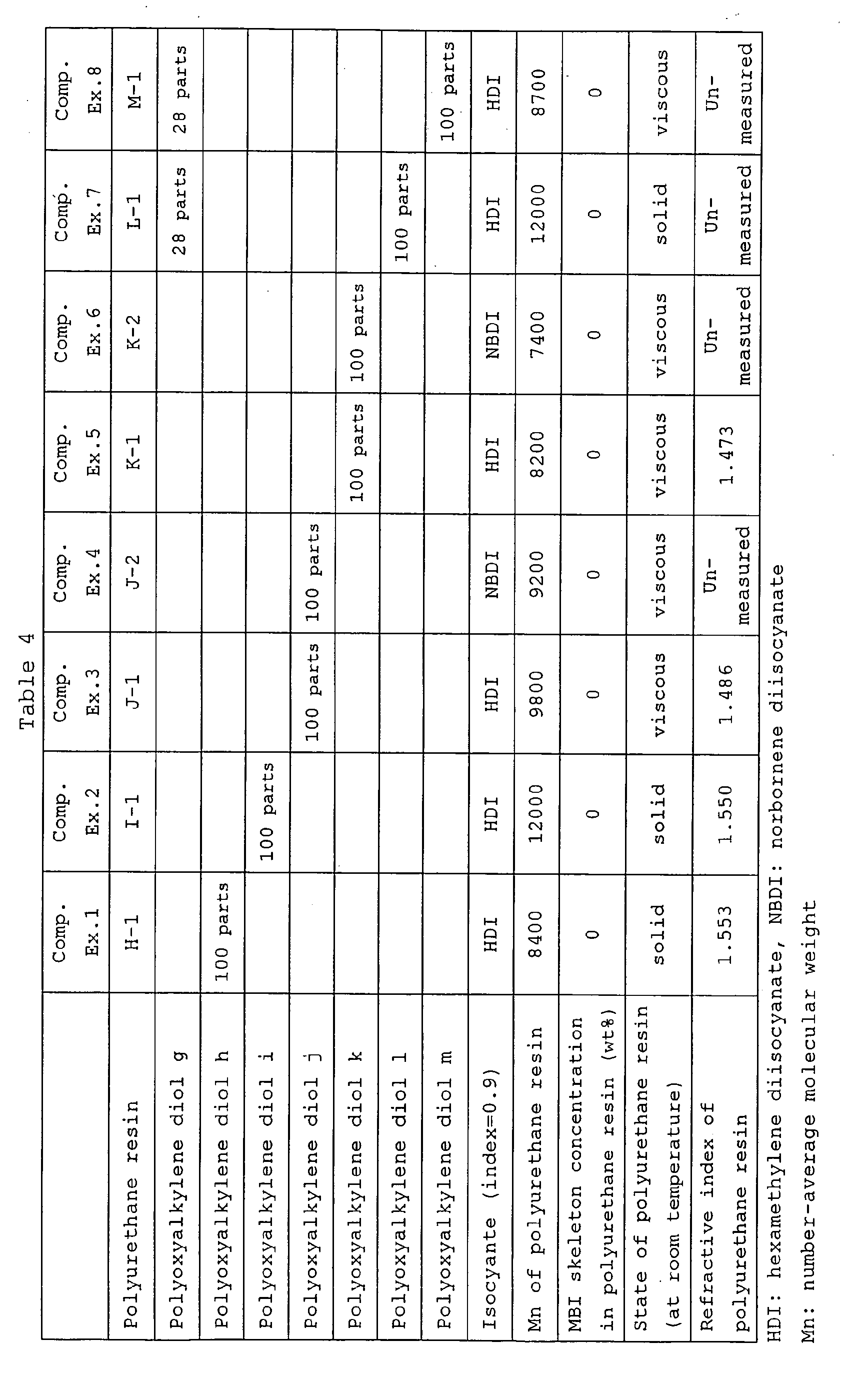

### <Examples 8 to 17>

### (Preparation of Thermoplastic polymer composition)

In each example, LABO PLASTOMILL 4C150-01 (manufactured by Toyo Seiki Seisaku-sho Co., Ltd.) was adjusted to a temperature of 180°C. Into the cell thereof, 57.6 g of a linear low-density polyethylene resin (LLDPE) (available from Mitsui Chemicals, Inc., Evolue SP2040), 6.4 g of the polyurethane resin prepared in each of Examples 1 to 7 (10 % by weight based on the polyethylene resin) and lithium chloride (available from Tokyo Kasei Kogyo Co., Ltd.) in a proportion as shown in Table 5 were introduced and kneaded at revolutions of biaxial kneading blades of 60 rpm and 40 rpm for 10 min. The resin taken out was drawn using a SUS-made bat and cut into pellets to prepare each of thermoplastic polymer compositions P-1 to P-10.

Each 10 g of the resulting thermoplastic polymer composition pellet and a liner low-density polyethylene were hot-pressed under reduced pressure at 170°C for 2 min to prepare a sheet having a thickness of 0.5 mm. With regard to the sheet thus prepared, the surface intrinsic resistance, the water contact angel and the haze were measured. The results are shown in Table 5.

### <Referential Example 1>

A thermoplastic polymer composition P-11 was prepared in the same manner as in Example 8, except that the urethane resin was not used. In the same manner as in Example 8, a sheet having a thickness of 0.5 mm was prepared and then the surface intrinsic resistance, the water contact angel and the haze thereof were measured. Further, the refractive index of the sheet was measured and compared with the refractive indexes of the polyurethane resins as shown in Tables 3 and 4. The results are shown in Table 6.

### <Referential Example 2>

A thermoplastic polymer composition P-12 was prepared in the same manner as in Example 10, except that the urethane resin was not used. In the same manner as in Example 8, a sheet having a thickness of 0.5 mm was prepared and then the surface intrinsic resistance, the water contact angel and the haze thereof were measured. The results are shown in Table 6.

### <Comparative Examples 9 to 17>

In each comparative example, each of thermoplastic polymer compositions P-13 to P-21 was prepared in the same manner as in Example 8, except that the polyurethane resin prepared in each of Comparative Examples 1 to 8 was used instead of the polyurethane resins prepared in Examples 1 to 7 and lithium chloride (available from Tokyo Kasei Kogyo Co., Ltd.) was used in a proportion as shown in Table 7. In the same manner as in Example 8, each sheet having a thickness of 0.5 mm was prepared and then the surface intrinsic resistance, the water contact angel and the haze were measured. The results are shown in Table 7.

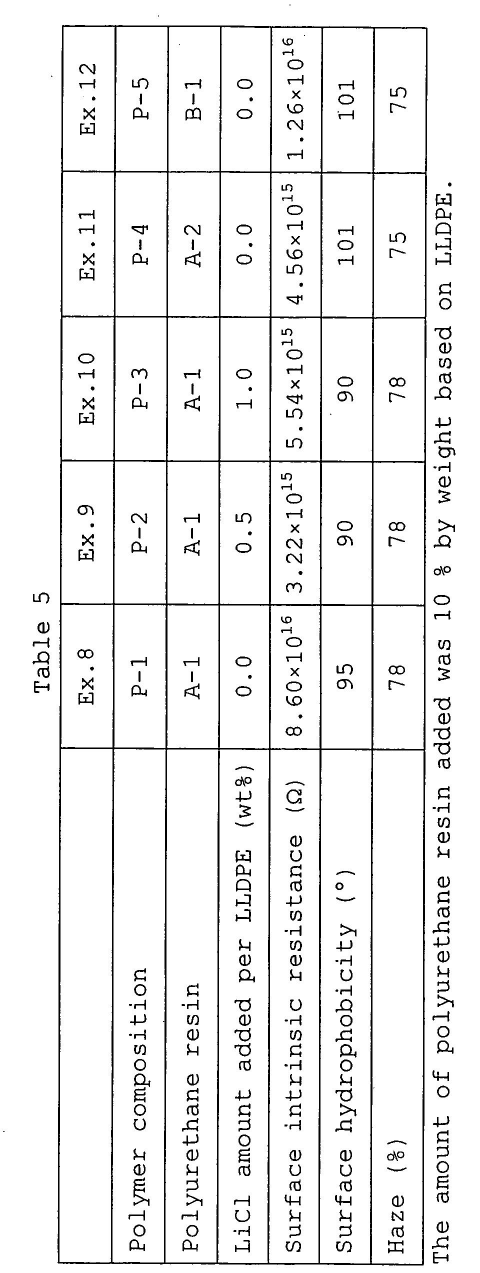

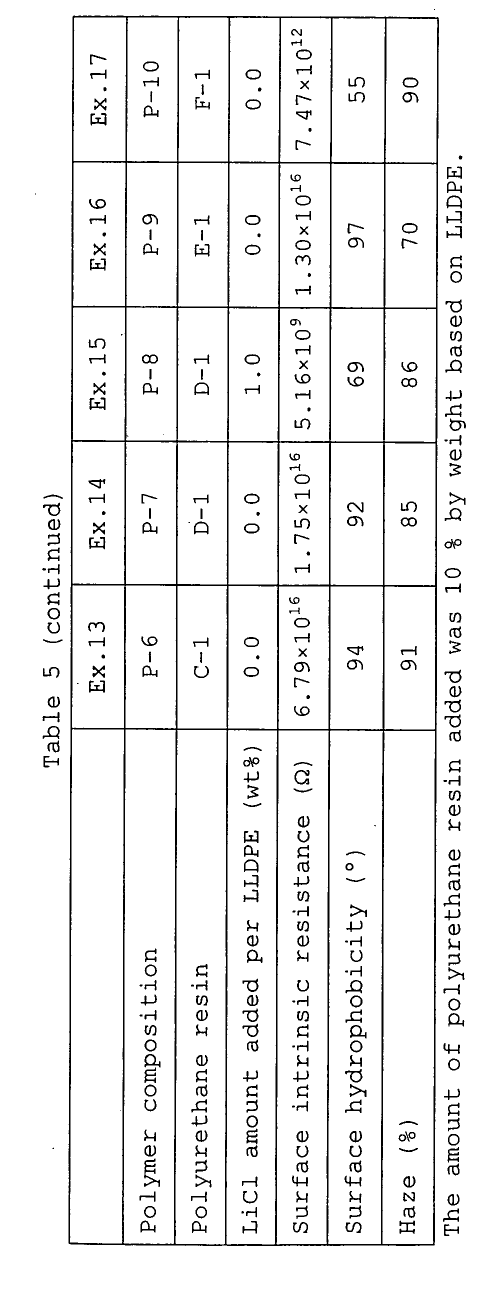

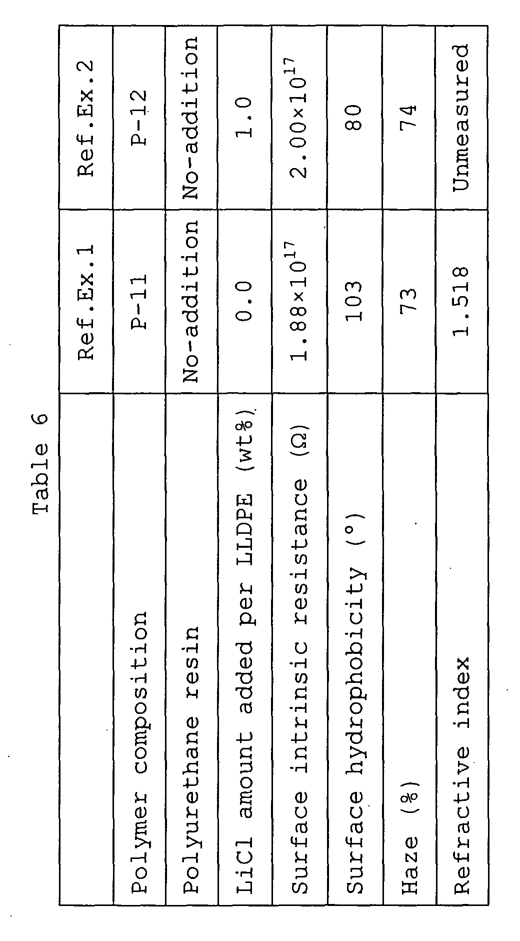

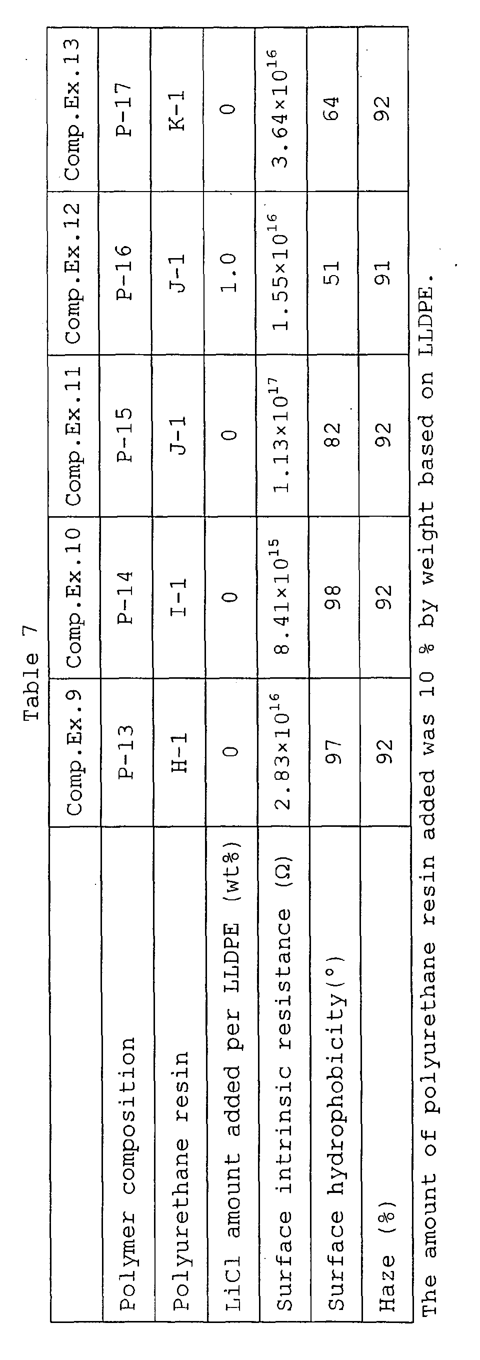

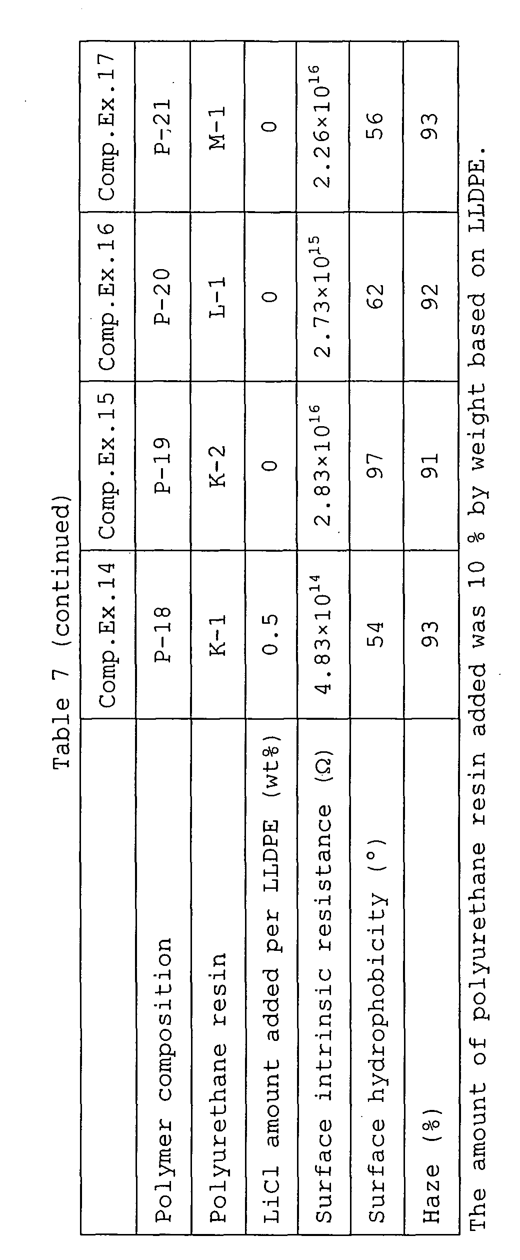

As seen in Tables 5 and 6, it was found that in the thermoplastic polymer compositions described in Examples, the surface intrinsic resistance is decreased, the surface hydrophobicity was maintained and the haze was not deteriorated, namely, the resin transparency was maintained, as compared with the compositions as described in Referential Examples. In Referential Examples, it was found that the surface intrinsic resistance was not decreased even if lithium chloride was added. Further, it was found that as the refractive indexes of the polyurethane resins as shown in Tables 3 and 4 were near the refractive index of polyethylene as shown in Referential Example 1, the difference in haze between the thermoplastic polymer composition and the polyethylene or the lithium chloride-containing polyethylene was narrower and the transparency was maintained.

In comparison of Tables 5 to 7, it was found that the polymer compositions prepared in Comparative Examples did not satisfy all properties from the viewpoint of a decrease in surface intrinsic resistance, maintenance of surface hydrophobicity and maintenance of haze. In particular, it was found that the haze was markedly deteriorated.

### INDUSTRIAL APPLICABILITY

The thermoplastic polymer composition of the present invention exhibits stable antistatic properties for a long period of time and also has excellent transparency so that it is useful as a permanent antistatic agent. In particular, when the thermoplastic polymer compound is added to a thermoplastic resin as a polymer additive, the resulting molded articles have an improved surface intrinsic resistance, are free from tack because the surface hydrophilicity of the resulting molded articles is maintained, and have an effect such that the haze thereof is not deteriorated. Further, since the thermoplastic polymer compound has excellent retention properties for inorganic salts of alkali metals or the like, the thermoplastic polymer compositions containing the thermoplastic polymer compound and an inorganic salt of alkali metal or the like have excellent transparency and thereby are useful as an antistatic agent.

Moreover, the thermoplastic polymer compound, the thermoplastic polymer composition and the resin composition according to the present invention can be used not only for the antistatic agent as described above but also in the various fields of urethane resin, for example, in wide applications such as urethane resin raw materials for flexible and rigid polyurethane foams and elastomers, paints, sealing materials, floor materials, adhesives and the like; and further compatibilizing agents, dispersing agents, antifogging agents, lubricating oils, deashing agents, surfactants and the like, for various resins.

## Claims

1. A thermoplastic polymer compound having a molecular weight of not less than 3000 and a repeating unit represented by the following formula (1) 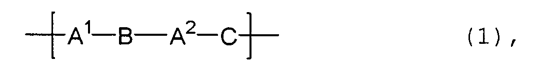 wherein
(i) structural units A¹ and A² are oxyalkylene groups and may be the same or different from each other,
(ii) structural unit B is represented by the following formula (2) 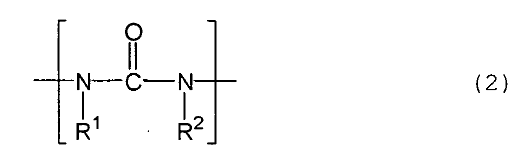 in which R¹ and R² are each independently a substituent containing a hydrocarbon group of 1 to 20 carbon atoms, and may contain an oxygen atom and a nitrogen atom, and R¹ and R² may form a ring structure by linking with each other, and
the structural unit B has a partial structure refractivity, as determined as the sum of atomic refractions using atomic refractivities, of from 14 to 35, and
when the structural unit B forms a compound represented by the following formula (3)
CH₃-B-CH₃ (3),
the dipole moment of the compound is in the range of 2.5D to 5.5D, and
(iii) the structure unit C is a bivalent organic group capable of binding to the structural units A¹ and A².

2. The thermoplastic polymer compound according to claim 1, wherein the structural unit B contains at least one structural unit selected from structural units represented by the following formulae (4) to (11): 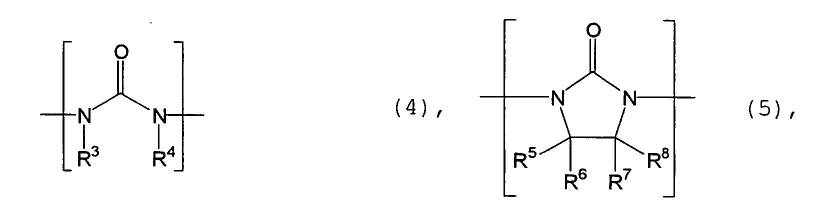 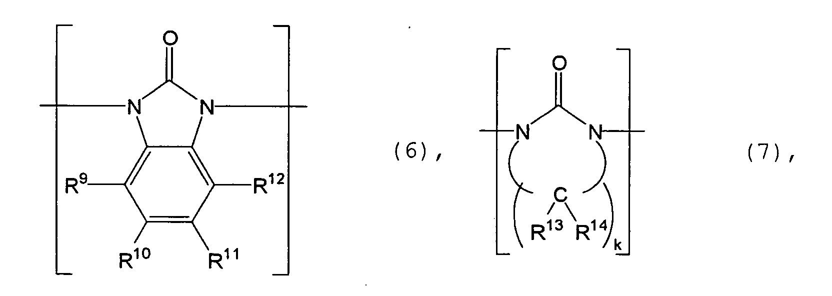 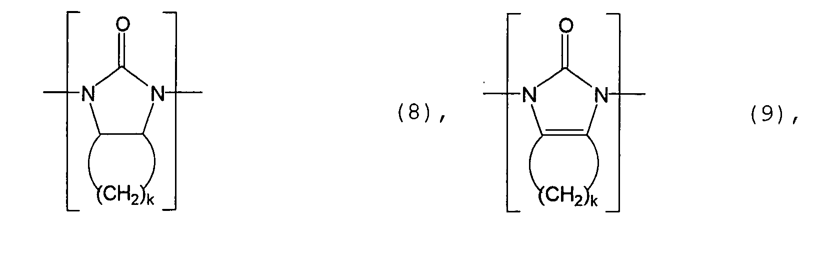 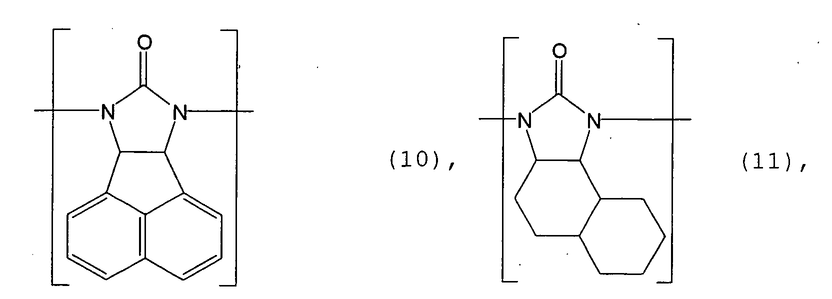 wherein, in the formula (4), R³ and R⁴ are each independently a substituent containing a hydrocarbon group of 1 to 20 carbon atoms, and may contain an oxygen atom and a nitrogen atom, in the formula (5), R⁵ to R⁸ are each independently a hydrogen atom or a substituent containing a hydrocarbon group of 1 to 19 carbon atoms, in the formula (6), R⁹ to R¹² are each independently a hydrogen atom or a substituent containing a hydrocarbon group of 1 to 17 carbon atoms, in the formula (7), R¹³ to R¹⁴ are each independently a hydrogen atom or a substituent containing a hydrocarbon group of 1 to 19 carbon atoms, and in the formulae (7) to (9), k is 3 or 4.

3. The thermoplastic polymer compound according to claim 1, which is a copolymer having the repeating unit represented by the formula (1) and a repeating unit represented by the following formula (12) 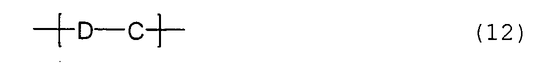 wherein the structural unit C is a bivalent organic group capable of binding to the structural unit D and the structural units A¹ and A² in the formula (1),
the structural unit D is a bivalent group containing at least one hydrocarbon group of 1 to 20 carbon atoms and obtained from a hydrocarbon-based diol HO-D-OH having a number-average molecular weight of 100 to 4800.

4. The thermoplastic polymer compound according to claim 3, wherein the hydrocarbon-based diol HO-D-OH is a comb-shaped diol having at least two monovalent hydrocarbon groups of 3 to 20 carbon atoms.

5. The thermoplastic polymer compound according to any one of claims 1 to 4, wherein the structural unit C is a bivalent group derived from at least one compound selected from the group consisting of a diisocyanate compound, dicarboxylic acid, dicarboxylic anhydride, dicarboxylic acid ester, dicarboxylic acid dihalide, carbonate compound, diol and dihalide given by substituting a hydroxyl group in diol with halogen.

6. A thermoplastic polymer composition comprising the thermoplastic polymer compound as claimed in any one of claims 1 to 5, and an alkali metal inorganic salt or an alkali earth metal inorganic salt.

7. An antistatic agent comprising the thermoplastic polymer compound as claimed in any one of claims 1 to 5 or the thermoplastic polymer composition as claimed in claim 6.

8. A resin composition comprising the thermoplastic polymer compound as claimed in any one of claims 1 to 5 or the thermoplastic polymer composition as claimed in claim 6, and a polyolefin.

9. A resin composition comprising the thermoplastic polymer compound as claimed in any one of claims 1 to 5 or the thermoplastic polymer composition as claimed in claim 6, and an ethylene vinyl acetate copolymer.

10. A resin composition comprising the thermoplastic polymer compound as claimed in any one of claims 1 to 5 or the thermoplastic polymer composition as claimed in claim 6, and an ethylene ethyl(meth)acrylate copolymer.

11. A resin composition comprising the thermoplastic polymer compound as claimed in any one of claims 1 to 5 or the thermoplastic polymer composition as claimed in claim 6, and an ethylene (meth)acrylic acid copolymer.

12. The resin composition according to any one of claims 8 to 11, wherein the difference between the Haze of the resin composition and the Haze of resin components other than the thermoplastic polymer compound contained in the composition is not more than 5.
